(19) Europäisches Patentamt
European Patent Office
Office européen des brevets

(11) Numéro de publication: **0 114 012**
**B1**

# (12) FASCICULE DE BREVET EUROPEEN

(45) Date de publication du fascicule du brevet: **08.10.86**

(21) Numéro de dépôt: **83402390.5**

(22) Date de dépôt: **12.12.83**

(51) Int. Cl.⁴: **C 07 C 69/743,** C 07 C 121/38, C 07 C 153/11, C 07 C 33/42, A 01 N 53/00, A 23 K 1/16

(54) **Esters d'acides cyclopropane carboxyliques et d'alcools aliphatiques insaturés, procédé et intermédiaires de préparation et compositions pesticides les renfermant.**

(30) Priorité: **15.12.82 FR 8221039**
**24.06.83 FR 8310477**

(43) Date de publication de la demande:
**25.07.84 Bulletin 84/30**

(45) Mention de la délivrance du brevet:
**08.10.86 Bulletin 86/41**

(84) Etats contractants désignés:
**AT BE CH DE GB IT LI LU NL SE**

(56) Documents cités:
**EP - A - 0 050 534**
**FR - A - 2 226 383**

(73) Titulaire: **ROUSSEL-UCLAF, 35, boulevard des Invalides, F-75007 Paris (FR)**

(72) Inventeur: **Tessier, Jean, 30 rue Jean Moulin, F-94300 Vincennes (FR)**
Inventeur: **Demoute, Jean-Pierre, 249bis rue de Rosny, F-93100 Montreuil sous Bois (FR)**

(74) Mandataire: **Fritel, Hubert, Département des Brevets ROUSSEL UCLAF B.P. no 9, F-93230 Romainville (FR)**

EP 0 114 012 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention concerne des esters d'acides cyclopropane carboxyliques et d'alcools aliphatiques insaturés, leur procédé et leurs intermédiaires de préparation et les compositions pesticides les renfermant.

L'invention a plus précisément pour objet, sous toutes leurs formes stéréoisomères isolées ou en mélanges, les composés de formule générale (I):

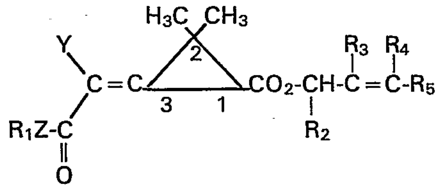

(I)

dans laquelle Y représente un atome d'hydrogène, de fluor, de chlore ou de brome, Z représente un atome d'oxygène ou de soufre, $R_1$ représente ou bien un radical alcoyle linéaire, ramifié ou cyclique, saturé ou insaturé, renfermant de 1 à 8 atomes de carbone, éventuellement substitué par un ou plusieurs groupements fonctionnels, identiques ou différents, ou bien un groupement aryle renfermant de 6 à 14 atomes de carbone, éventuellement substitué par un ou plusieurs groupements fonctionnels identiques ou différents, ou bien un radical hétérocyclique éventuellement substitué par un ou plusieurs groupements fonctionnels, identiques ou différents, $R_2$ représente un atome d'hydrogène, un atome de fluor, de chlore ou de brome, un radical alcoyle renfermant de 1 à 4 atomes de carbone, un groupement $-C\equiv N$ ou un groupement $-C\equiv CH$, $R_3$, $R_4$, $R_5$, identiques ou différents, représentent un atome d'hydrogène, un atome de fluor, de chlore ou de brome, un radical alcoyle linéaire, ramifié ou cyclique, renfermant de 1 à 8 atomes de carbone éventuellement substitué par un ou plusieurs groupements fonctionnels, identiques ou différents, un radical alcényle comportant de 2 à 8 atomes de carbone ou un radical alcynyle comportant de 2 à 8 atomes de carbone ou les radicaux $R_3$, $R_4$ et $R_5$ forment des cycles entre eux deux à deux.

Les composés de formule (I) peuvent exister sous de nombreuses formes stéréoisomères; ils possèdent, en effet, deux carbones asymétriques en 1 et 3 du cyclopropane; ils présentent en outre une possibilité d'isomère E/Z au niveau des doubles liaisons des chaînes latérales reliées au carbone en 1 et au carbone en 3 du cyclopropane; enfin, les radicaux $R_1$, $R_2$, $R_3$, $R_4$ et $R_5$ peuvent également présenter un ou plusieurs centres d'asymétrie.

Lorsque $R_1$ représente un radical alcoyle saturé, linéaire ou ramifié, il s'agit de préférence d'un radical méthyle, éthyle, n-propyle, isopropyle, n-butyle, sec-butyle, isobutyle, n-pentyle, n-hexyle, tert-butyle, tert-pentyle ou néo-pentyle.

Lorsque $R_1$ représente un radical cyclique, il s'agit de préférence d'un radical cyclopropyle, cyclobutyle, cyclopentyle ou cyclohexyle, d'un radical alcoyle, linéaire ou ramifié, portant un radical cyclique ou d'un radical cyclopropyle, cyclobutyle, cyclopentyle ou cyclohexyle substitué par un ou plusieurs radicaux alcoyles dont la liaison avec le groupement -COO- est située sur l'un quelconque de ses sommets, par exemple, le radical 1-méthylcyclobutyle, 1-méthylcyclopentyle, 1-méthylcyclohexyle ou 2,-2,3,3-tétraméthylcyclopropyle.

Lorsque $R_1$ représente un radical alcoyle insaturé, il s'agit d'un radical éthylénique, comme, par exemple, le radical vinyle ou 1,1-diméthylallyle ou d'un radical acétylénique, comme, par exemple, le radical éthynyle ou propynyle.

Lorsque $R_1$ représente un radical alcoyle substitué par un ou plusieurs groupements fonctionnels, on entend de préférence par alcoyle un radical renfermant de 1 à 8 atomes de carbone comme, par exemple, le radical méthyle, éthyle, propyle, isopropyle, n-butyle, isobutyle ou tert-butyle et par groupement fonctionnel un atome d'halogène, un groupement OH ou SH, un groupement OR' ou SR' dans lesquels R' représente un radical alcoyle renfermant de 1 à 8 atomes de carbone, un groupement $-NO_2$, $-N<^{R''}_{R'''}$ dans lequel R'' et R''', identiques ou différents, représentent un atome d'hydrogène, ou un radical alcoyle renfermant de 1 à 8 atomes de carbone, un groupement $-C\equiv N$, $SO_3H$ ou $PO_4H_2$ ou un groupement $-COalc_1$, $SO_2alc_2$, ou $SO_3alc_3$ dans lesquels $alc_1$, $alc_2$ et $alc_3$ représentent des radicaux alcoyles renfermant de 1 à 18 atomes de carbone.

$R_1$ peut représenter également un radical alcoyle substitué par un radical aryle comme, par exemple, le radical benzyle ou le radical phénéthyle, lui-même éventuellement substitué par un ou plusieurs groupements -OH, -Oalc ou alc renfermant de 1 à 8 atomes de carbone, par un ou plusieurs halogènes ou groupements $-CF_3$, $-OCF_3$, $-SCF_3$, ou par un groupement (G):

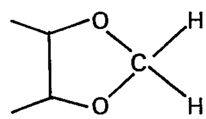

(G)

$R_1$ peut représenter également un radical alcoyle substitué sur deux carbones adjacents par un groupement ($G_1$):

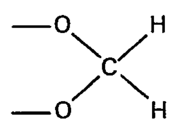

($G_1$)

ou substitué par un groupement 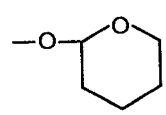

Lorsque $R_1$ représente un radical alcoyle substitué par un ou plusieurs groupements fonctionnels, on peut citer comme valeurs préférées de $R_1$, les radicaux:

$-(CH_2)_n-C\ Hal_3$ dans lequel n est un entier de 1 à 8 et Hal un atome d'halogène, par exemple le radical $-CH_2-CCl_3$, $-CH_2-CF_3$, $-CH_2-CH_2-CCl_3$ ou $CH_2-CH_2-CF_3$,

$-(CH_2)_{n_1}-CH\ Hal_2$ dans lequel Hal est défini comme ci-dessus et $n_1$ est un nombre de 0 à 8, par exemple le radical $-CH_2-CHCl_2$, $-CH_2-CHF_2$ ou $-CHF_2$,

$-(CH_2)_n-CH_2\ Hal$ dans lequel n et Hal sont définis comme ci-dessus, par exemple le radical $-CH_2-CH_2Cl$ ou $-CH_2-CH_2F$, $-C-(CHal_3)_3$ dans lequel Hal est défini comme ci-dessus, par exemple le radical $-C-(CF_3)_3$ ou

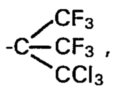, 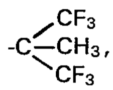, 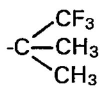 ou 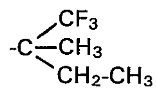

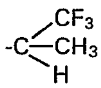 ou 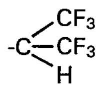

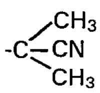 ou 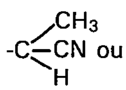 ou $-(CH_2)_n-CN$, dans lequel n est défini comme précédemment,

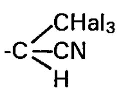, dans lequel Hal est défini comme précédemment par exemple le radical 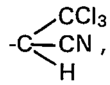,

$-(CH_2)_n-OR''''$, dans lequel n est défini comme récédemment et $R''''$ représente un atome d'hydrogène ou un radical alcoyle linéaire ou ramifié, comportant de 1 à 8 atomes de carbone, par exemple le radical $-CH_2-OCH_3$, $-CH_2-CH_2-O-CH_3$, $-CH_2-CH_2-O-CH_2-CH_3$ ou $-CH_2-CH_2-OH$,

$-(CH_2)_n-$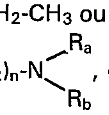, dans lequel n est défini comme précédemment et $R_a$ et $R_b$, identiques ou différents, représentent un atome d'hydrogène ou un radical alcoyle renfermant de 1 à 8 atomes de carbone, par exemple le radical $-CH_2-CH_2-$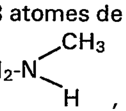,

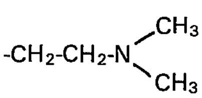 ou 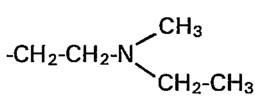,

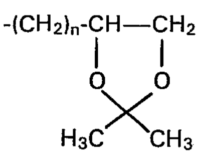 dans lequel n est défini comme précédemment, par exemple le radical

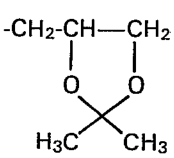

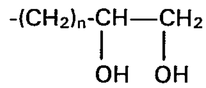, dans lequel n est défini comme précédemment, par exemple le radical 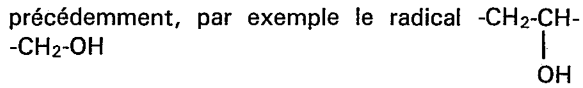

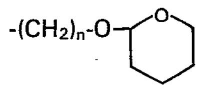, dans lequel n est défini comme précédemment, par exemple le radical 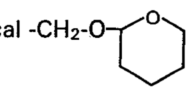 ou 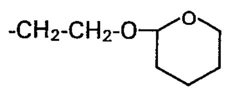,

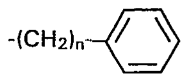, dans lequel n est défini comme précédemment, par exemple le radical benzyle ou phénéthyle,

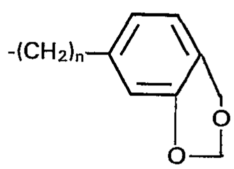, dans lequel n est défini comme précédemment, par exemple le radical

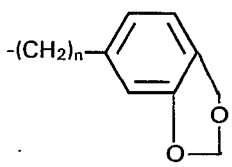.

Lorsque $R_1$ représente un radical aryle éventuellement substitué, il s'agit de préférence du radical phényle ou du radical phényle substitué par un ou plusieurs groupements OH, Oalc ou alc, renfermant de 1 à 8 atomes de carbone, ou par un halogène ou un groupement $-CF_3$, $-OCF_3$ ou $SCF_3$.

Lorsque $R_1$ représente un radical hétérocyclique, il s'agit de préférence du radical pyridinyle, furanyle, thiophényle, oxazolyle ou thiazolyle.

Lorsque $R_1$ représente un radical hétérocyclique substitué par un ou plusieurs groupements fonctionnels, il s'agit de préférence d'un radical hétérocyclique mentionné ci-dessus substitué par un ou plusieurs des groupements fonctionnels également mentionnés ci-dessus.

Lorsque $R_2$ représente un radical alcoyle, il s'agit de préférence d'un radical méthyle ou éthyle.

Lorsque $R^3$, $R^4$ ou $R^5$ représentent un radical alcoyle linéaire, ramifié ou cyclique éventuellement substitué par un ou plusieurs groupements fonctionnels, il s'agit de préférence d'un radical méthyle, éthyle, isopropyle, n-butyle, isobutyle ou tert-butyle, substitué éventuellement par un ou plusieurs des groupements fonctionnels mentionnés ci-dessus.

Lorsque $R_3$, $R_4$ ou $R_5$ représentent un radical alcényle, il s'agit de préférence du radical vinyle, allyle ou 2-butényle.

Lorsque $R_3$, $R_4$ ou $R_5$ représentent un radical alcynyle, il s'agit de préférence du radical éthynyle, propargyle ou 2-butynyle.

Parmi les composés de formule (I), on peut citer ceux pour lesquels Y, Z, $R_1$, $R_3$, $R_4$ et $R_5$ sont définis comme précédemment et $R^2$ représente un atome d'hydrogène, de fluor, de chlore ou de brome, un groupement $-C{\equiv}N$ ou $-C{\equiv}CH$.

Parmi les composés préférés de l'invention, on peut citer tout particulièrement ceux pour lesquels $R^4$ représente un radical méthyle ou éthyle.

L'invention a notamment pour objet les composés de formule générale ($I_A$):

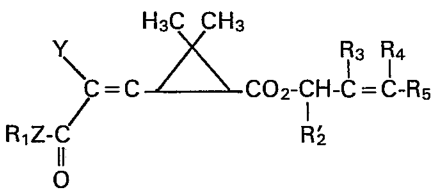

($I_A$)

dans laquelle Y, Z, $R_1$, $R_3$, $R_4$ et $R_5$ conservent les significations précitées et $R'_2$ représente un atome d'hydrogène ou un radical éthynyle et, parmi ceux-ci, les composés de formule générale ($I_B$):

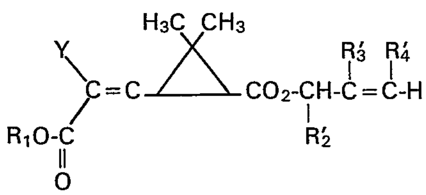

($I_B$)

dans laquelle Y, $R_1$ et $R'_2$ conservent les significations précitées, $R'_3$ représente un radical alcoyle linéaire, ramifié ou cyclique renfermant de 1 à 8 atomes de carbone et $R'_4$ représente soit un radical alcoyle linéaire, ramifié ou cyclique renfermant de 1 à 8 atomes de carbone, soit un radical alcynyle comportant de 2 à 8 atomes de carbone.

L'invention a plus particulièrement pour objet les composés tels que définis précédemment répondant à la formule (I) dans laquelle Y représente un atome d'hydrogène ou de fluor et la géométrie de la double liaison de la chaîne latérale portée sur le carbone en 3 du cyclopropane est respectivement Z ou E.

L'invention a tout particulièrement pour objet les composés répondant à la formule (I) telle que définie précédemment figurant ci-après dans la partie expérimentale, aux exemples 1, 5, 7, 9, 10, 17, 18, 25, 27, 46, 53 et 56.

L'invention a également pour objet un procédé de préparation des composés de formule générale (I) tels que définis précédemment, caractérisé en ce que l'on fait réagir un acide de formule générale (II):

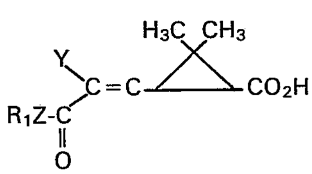

(II)

ou un dérivé fonctionnel de cet acide, sur un alcool de formule générale (III):

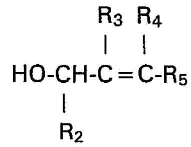

(III)

ou sur un dérivé fonctionnel de cet alcool. Par dérivé fonctionnel d'acide, on entend de préférence un chlorure ou un anhydride d'acide. Par dérivé fonctionnel d'alcool, on entend de préférence un chlorure, un bromure ou un sulfonate dérivé de cet alcool.

Selon un mode d'exécution préféré du procédé de l'invention, on estérifie l'acide de formule (II) par l'alcool de formule (III) en présence de dicyclohexylcarbodiimide et de 4-diméthylaminopyridine.

Les composés de formule (II) sont décrits dans les demandes de brevets européens 0 038 271 - 0 041 021 - 0 048 186 - 0 050 534.

Certains des composés de formule (III) sont décrits dans la demande de brevet allemand 2 647 366 ou dans la demande japonaise 81 147 734 ou dans C. A. 96.197906m. Les alcools de formule (III) qui ne sont pas décrits dans ces demandes de brevets peuvent être préparés selon le schéma suivant:

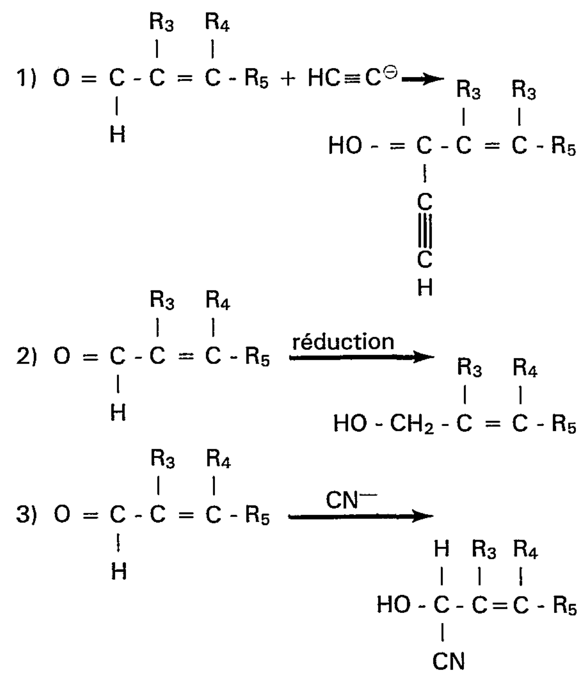


Les alcools de formule 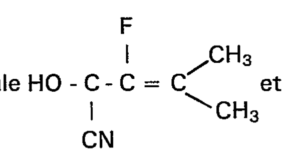 et de formule 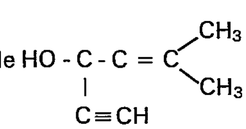 sont des produits nouveaux et sont donc en eux-mêmes un objet de la présente invention, notamment à titre de produits intermédiaires pour la préparation des composés de formule (I).

Les composés de formule (I) présentent d'intéressantes propriétés qui permettent leur utilisation dans la lutte contre les parasites. Il peut s'agir par exemple de la lutte contre les parasites des végétaux, les parasites des locaux et les parasites des animaux à sang chaud. C'est ainsi que l'on peut utiliser les composés de l'invention pour lutter contre les insectes, les nématodes et les acariens parasites des végétaux et des animaux.

L'invention a donc ainsi pour objet les composés de formule (I) tels que définis précédemment pour leur utilisation à la lutte contre les parasites des végétaux, les parasites des locaux et les parasites des animaux à sang chaud.

Les produits de formule (I) peuvent être utilisés notamment pour lutter contre les insectes dans le domaine agricole, pour lutter par exemple contre les pucerons, les larves de lépidoptères et les coléoptères. Ils sont utilisés à des doses comprises entre 10 g et 300 g de matière active à l'hectare.

Les produits de formule (I) peuvent également être utilisés pour lutter contre les insectes dans les locaux, pour lutter notamment contre les mouches, les moustiques et les blattes, ainsi que pour lutter contre les insectes parasites des animaux, par exemple les poux, notamment chez les bovins, les ovins et les volailles.

Les produits de formule (I) peuvent aussi être utilisés pour lutter contre les acariens et les nématodes parasites des végétaux.

Les composés de formule (I) peuvent encore être utilisés pour lutter contre les acariens parasites des animaux, pour lutter par exemple contre les tiques et notamment les tiques de l'espèce Boophilus, ceux de l'espèce Hyalomnia, ceux de l'espèce Amblyomnia et ceux de l'espèce Rhipicephalus ou pour lutter contre toutes sortes de gales et notamment la gale sarcoptique, la gale psoroptique et la gale chorioptique. Ils peuvent aussi être utilisés contre les helminthes.

L'invention a aussi pour objet les compositions destinées à la lutte contre les parasites des végétaux, les parasites des locaux et les parasites des animaux à sang chaud, caractérisées en ce qu'elles renferment comme principe actif au moins un des produits définis précédemment.

L'invention a notamment pour objet les compositions insecticides renfermant comme principe actif au moins l'un des produits définis précédemment.

L'invention à également pour objet les compositions acaricides renfermant comme principe actif au moins l'un des produits définis précédemment ainsi que les compositions nématicides renfermant comme principe actif au moins l'un des produits définis précédemment.

L'invention à également pour objet les compositions acaricides renfermant comme principe actif l'un au moins des produits définis ci-dessus, caractérisées en ce qu'elles sont utilisées dans la lutte contre les parasites des animaux à sang chaud, notamment contre les tiques et les gales.

Parmi les compositions notamment inseticides préférées de l'invention, on peut citer tout spécialement les compositions renfermant les composés décrits dans les exemples.

Ces compositions sont préparées selon les procédés usuels de l'industrie agrochimique. Elles peuvent être additionnées éventuellement d'un ou plusieurs autres agents pesticides. Ces compositions peuvent se présenter sous forme de poudres, granulés, suspensions, émulsions, solutions, solutions pour aérosols, bandes combustibles, appâts ou autres préparations employées classiquement pour l'utilisation de ce genre de composés.

Outre le principe actif, ces compositions contiennent, en général, un véhicule et/ou un agent tensioactif, non ionique, assurant, en outre, une dispersion uniforme des substances constitutives du mélange. Le véhicule utilisé peut être un liquide, tel que l'eau, l'alcool, les hydrocarbures ou autres solvants organiques, une huile minérale, animale ou végétale, une poudre telle que le talc, les argiles, les silicates, le kieselguhr ou un solide combustible.

Les compositions insecticides selon l'invention contiennent de préférence de 0,005% à 10% en poids de matière active.

Selon un mode opératoire avantageux pour un usage dans les locaux, les compositions selon l'invention sont utilisées sous forme de compositions fumigantes.

Les compositions selon l'invention peuvent alors être avantageusement constituées, pour la partie non active, d'un serpentin combustible, ou encore d'un substrat fibreux incombustible. Dans ce dernier cas, le fumigant obtenu après incorporation de la matière active est placé sur un appareil chauffant.

Dans le cas où l'on utilise un serpentin insecticide, le support inerte peut être, par exemple, composé de marc de pyrèthre, poudre de Tabu (ou poudre de feuilles Machilus Thumbergii), poudre de tige de pyrèthre, poudre de feuille de cèdre, poudre de bois (telle que la sciure de pin) amidon et poudre de coque de noix de coco.

La dose de matière active peut alors être, par exemple, de 0,03 à 1% en poids.

Dans le cas où l'on utilise un support fibreux incombustible, la dose de matière active peut alors être, par exemple, de 0,03 à 25% en poids.

Les compositions selon l'invention pour un usage dans les locaux peuvent aussi être obtenues en préparant une huile pulvérisable à base de principe actif, cette huile imbibant la mèche d'une lampe et étant alors soumise à la combustion.

La concentration du principe actif incorporé à l'huile est, de préférence, de 0,03 à 25% en poids.

Les compositions acaricides et nématicides peuvent se présenter notamment sous forme de poudre, granulés, suspensions, émulsions, solutions. Les compositions acaricides et nématicides peuvent être additionnées éventuellement d'un ou plusieurs autres agents pesticides.

Pour l'usage acaricide, on utilise de préférence des poudres mouillables, pour pulvérisation foliaire, contenant de 1 à 80% de principe actif ou des liquides pour pulvérisation foliaire contenant de 1 à 500 g/l de principe actif. On peut également employer des poudres pour poudrages foliaire contenant de 0,05 à 3% de matière active.

Pour l'usage nématicide, on utilise de préférence des liquides pour traitement des sols contenant de 300 à 500 g/l de principe actif.

Les composés acaricides et nématicides selon l'invention sont utilisés, de préférence, a des doses comprises entre 1 et 100 g de matière active à l'hectare.

Lorsqu'il s'agit de lutter contre les acariens parasites des animaux, on peut incorporer les produits de l'invention dans des compositions alimentaires en association avec un mélange nutritif adapté à l'alimentation animale. Le mélange nutritiel peut varier selon l'espèce animale; il peut renfermer des céréales, des sucres et des grains, des tourteaux de soja, d'arachide et de tournesol, des farines d'origine animale, par exemple des farines de poissons, des acides aminés de synthèse, des sels minéraux, des vitamines et des antioxydants.

L'invention a donc ainsi également pour objet les compositions destinées à l'alimentation animale renfermant comme principe actif l'un des produits définis précédemment.

Lorsqu'il s'agit de lutter contre les acariens parasites des animaux, les compositions de l'invention peuvent être administrées par voie externe, par vaporisation, par shampooing, par bain ou badigeonnage de l'épine dorsale selon la méthode «pour-on». Elles peuvent aussi être administrées par voie digestive.

L'invention à également pour objet les associations douées d'activité insecticide, acaricide ou nématicide, caractérisées en ce qu'elles contiennent comme matière active, d'une part au moins des composés de formule générale (I) et d'autre part, un au moins des esters pyréthrinoïdes choisis dans le groupe constitué par les esters d'alléthrolones, d'alcool 3,4,5,6-tétrahydrophthalimido méthylique, d'alcool 5-benzyl 3-furyl méthylique, d'alcool 3-phénoxy benzylique et d'alcools α-cyano 3-phénoxy benzyliques des acides chrysanthémiques, par les esters d'alcool 5-benzyl 3-furyl méthylique des acides 2,2-diméthyl 3-(2-oxo 3-tétrahydrothiophénylidène méthyl) cyclopropane-1-carboxyliques, par les esters d'alcool 3-phénoxy benzylique et d'alcools α-cyano 3-phénoxy benzyliques des acides 2,2-diméthyl 3-(2,2-dichlorovinyl) cyclopropane-1-carboxyliques, par les esters d'alcools α-cyano 3-phénoxy benzyliques d'acides 2,2-diméthyl 3-(2,2-dibromovinyl) cyclopropane-1-carboxyliques, par les esters d'alcool 3-phénoxy benzylique des acides 2-parachlorophényl 2-isopropyl acétiques, par les esters d'alléthrolones, d'alcool 3,4,5,6-tétrahydrophthalimido méthylique, d'alcool 5-benzyl 3-furyl méthylique, d'alcool 3-phénoxy benzylique et d'alcools α-cyano 3-phénoxy benzyliques des acides 2,2-diméthyl 3-(1,2-2,2-tétrahaloéthyl) cyclopropane-1-carboxyliques, dans lesquels «halo» représente un atome de fluor, de chlore ou de brome, étant entendu que les copules acides et alcools des esters pyréthrinoïdes ci-dessus peuvent exister sous toutes leurs formes stéréoisomères possibles.

Pour exalter l'activité biologique des produits de l'invention, on peut les additionner à des synergistes classiques utilisés en pareil cas tel que le 1-(2,5,8-trioxadodécyl) 2-propyl 4,5-méthylène dioxy benzène (ou butoxyde de pipéronyle) ou la N-(2-éthylheptyl) bicyclo/2,2-1)-5-heptène 2,3-dicarboximide ou le pipéronyl-bis-2-(2'-n-butoxyéthoxy) éthylacétal (ou tropital).

L'invention a donc également pour objet les compositions et associations telles que définies précédemment, caractérisées en ce qu'elles renferment, en outre, un synergiste des pyréthrinoïdes.

Les exemples suivants illustrent l'invention sans toutefois la limiter.

*Exemple 1*

*1R, cis 2,2-diméthyl 3[1(ΔZ) 3-méthoxy 3-oxo propényl] cyclopropane carboxylate de [1(R) ou (S) éthynyl 2-méthyl] 2(ΔE) penténylе*

On mélange 4 g d'acide 1R, cis 2,2-diméthyl 3[1(ΔZ) 3-méthoxy 3-oxo propényl] cyclopropane carboxylique, 2,45 g de 4-méthyl 4(ΔE) hepten 1-yn 3-ol, préparé selon le procédé décrit dans C.A. 9619706 n, 50 cm3 de dichlorométhane, introduit lentement une solution de 4,14 g de dicyclohexylcarbodiimide, de 0,2 g de 4-diméthyl amino pyridine dans 50 cm3 de dichlorométhane, agite à 20°C pendant 4 heures, filtre, concentre le filtrat à sec par distillation sous pression réduite, chromatographie le résidu sur silice en éluant avec un mélange d'hexane et d'éther isopropylique (9/1) et obtient 1,27 g d'isomère A recherché et 1,72 g d'isomère B recherché.

*Isomère A*

$[\alpha]_D = +67°$ (c=0,6%, chloroforme)

*Spectre de RMN* (deutérochloroforme)

pics à 0,87-0,98-1,1 ppm atribués aux hydrogènes du méthyle de l'éthyle

pics à 1,30-1,33 ppm attribués aux hydrogènes des méthyles géminés

pic à 1,75 ppm attribué aux hydrogènes du méthyle

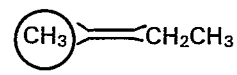

pics à 1,8-2,2 ppm attribués aux hydrogènes du méthylène de l'éthyle

pics à 2,55-2,58 ppm attribués à l'hydrogène de l'éthynyle

pic à 3,8 ppm attribué aux hydrogènes du méthyle du méthoxyle

pics à 5,6-5,9 ppm attribués aux hydrogènes de

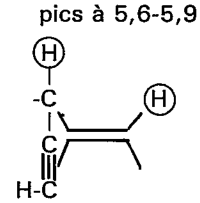

pics à 5,9-6,1 ppm et 6,5-6,9 ppm attribués aux hydrogènes de 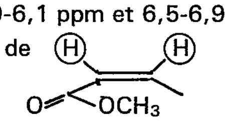

*Isomère B*

*PF = 56°C*

$[\alpha]_D = +71°$ (c=0,5%, chloroforme)

*Spectre de RMN* (deutérochloroforme)

pics à 0,87-0,98-1,1 ppm atribués aux hydrogènes du méthyle de l'éthyle

pic à 1,73 ppm attribué aux hydrogènes des méthyles géminés

pic à 1,73 ppm attribué aux hydrogènes du méthyle de

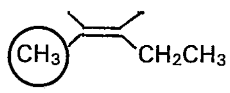

pics à 2,5-2,53 ppm attribués à l'hydrogène acétylénique

pic à 3,7 ppm attribués aux hydrogènes du méthyle du méthoxyle

pics à 5,6-5,8 ppm attribués aux hydrogènes de

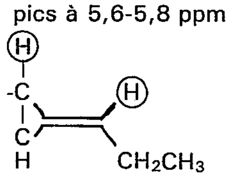

pics à 5,8-6,0 et 6,5-6,8 ppm attribués aux hydrogènes de

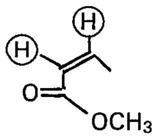

*Exemple 2*

*1R, cis 2,2-diméthyl 3[ΔZ) 3-oxo-3-terbutoxy propényl] cyclopropane carboxylate de [1(RS) éthynyl 2-méthyl] 2(ΔE) pentényle*

On mélange 2,4 g d'acide 1R, cis 2,2-diméthyl 3[(ΔZ) 3-oxo 3-terbutoxy propényl] cyclopropane carboxylique, 1,24 g de 4-méthyl 4(ΔE)-hepten 1-yn-3-ol, 50 cm3 de dichlorométhane, 2,06 g de dicyclohexylcarbodiimide, 25 cm3 de dichlorométhane et 0,1 g de 4-diméthyl amino pyrdine, agite pendant 1 heure à +10°C puis pendant 16 heures à 20°C, filtre, concentre à sec le filtrat par distillation sous pression réduite, chromatographie le résidu sur silice en éluant avec un mélange d'hexane et d'éther isopropylique (9/1) et obtient 2,42 g de produit recherché.

*Spectre de RMN* (deutérochloroforme)

pics à 0,87-0,98-1,1 ppm atribués aux hydrogènes du méthyle de l'éthyle

pics à 1,29-1,33 ppm attribués aux hydrogènes des méthyles géminés

pic à 1,5 ppm attribué aux hydrogènes des méthyles du terbutyle

pic à 1,75 ppm attribué aux hydrogènes du méthyle de

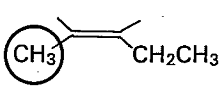

pics à 2,5-2,53 et 2,52-2,55 ppm attribués à l'hydrogène acétylénique

pics à 5,6-6,0 ppm attribués aux hydrogènes de

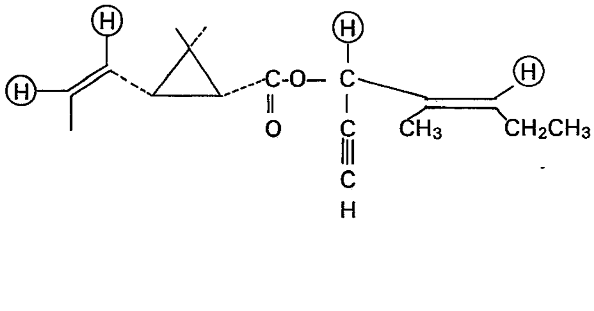

pics à 6,4-6,8 ppm attribués à l'hydrogène de

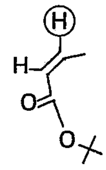

*Exemple 3*

*1R, cis 2,2-diméthyl 3[(ΔZ) 3-oxo 3-méthoxypropényl] cyclopropane carboxylate de (RS) 1-cyano 2-fluoro 3-méthyl 2-butényl*

*Stade A:* 1-cyano 2-fluoro 3-méthyl 2-buténol.

On mélange 16,2 g de 3-méthyl 2-fluoro 2-buténol, 44 cm3 de méthanol, 90 cm3 d'eau, 22 cm3 d'acide acétique, ajoute à 0°C, par petites fractions, 12,6 g de cyanure de sodium, agite pendant 5 minutes à 0°C puis pendant 1 heure à 20°C, extrait à l'éther éthylique, concentre à sec par distillation sous pression réduite et obtient 19,5 g de 1-cyano 2-fluoro 3-méthyl 2-buténol.

*Stade B:* 1R, cis 2,2-diméthyl 3[(ΔZ) 3-oxo 3-méthoxy propényl] cyclopropane carboxylate de (RS) 1-cyano 2-fluoro 3-méthyl 2-butényle.

On mélange 2 g d'acide 1R, cis 2,2-diméthyl 3[(ΔZ) 3-oxo 3-méthoxy propényl] cyclopropane carboxylique, 15 cm3 de chlorure de méthylène, 1,4 g de 2-fluoro 3-méthyl (RS) 1-cyano 2-buténol, 40 mg de 4-diméthyl amino pyridine, ajoute à 0°C, une solution de 2 g de dicyclohexylcarbodiimide dans 10 cm3 de chlorure de méthylene, agite pendant 3 heures à 20°C, filtre, concentre le filtrat à sec par distillation sous pression réduite, chromatographie le résidu sur silice en éluant par un mélange d'hexane et d'acétate d'éthyle (85/15) et obtient 2,4 g d'ester recherché.

$[\alpha]_D$ = +84° (c=0,5%, chloroforme).

Les composés dont les caractéristiques sont résumées dans le tableau ci-après ont été préparés selon le procédé de l'exemple 3. Ces composés sont les suivants:

- le 1R, cis 2,2-diméthyl 3[(ΔZ) 3-oxo 3-terbutoxy propényl] cyclopropane carboxylate de (RS) 1-cyano 2-fluoro 3-méthyl 2-butény le;
- le 1R, cis 2,2-diméthyl 3[(ΔZ) 3-oxo 3-méthoxy propényl] cyclopropane carboxylate de 3-méthyle 2-butényle;
- le 1R, cis 2,2-diméthyl 3[(ΔZ) 3-oxo 3-terbutoxy propényl] cyclopropane carboxylate de 2-fluoro 3-méthyl 2-butènyle;
- le 1R, cis 2,2-diméthyl 3[(ΔZ) 3-oxo 3-méthoxy propényl] cyclopropane carboxylate de 2-fluoro 3-méthyl 2-butenyle;
- le 1R, cis 2,2-diméthyl 3[(ΔZ) 3-oxo 3-méthoxy propényl] cyclopropane carboxylate de 2-propényle;
- le 1R, cis 2,2-diméthyl 3[1-(ΔZ) 3-méthoxy 3-oxo propényl] cyclopropane carboxylate d'α 2-méthyl 2-propényle;
- le 1R, cis 2,2-diméthyl 3[1-(ΔE) 3-éthoxy 3-oxo 2-fluoro propényl] cyclopropane carboxylate d'α 2-méthyl 2-propényle;
- le 1R, cis 2,2-diméthyl 3[(ΔZ) 3-oxo 3-méthoxy propényl] cyclopropane carboxylate d'α 2-méthyl 2-E butényle;

- le 1R, cis 2,2-diméthyl 3[(ΔZ) 3-oxo 3-méthoxy propényl] cyclopropane carboxylate de 2E buté-nyle;
- le 1R, cis 2,2-diméthyl 3[(ΔZ) 3-oxo 3-méthoxy propényl] cyclopropane carboxylate de 3,3-dichloro propène;
- le 1R, cis 2,2-diméthyl 3[1-(ΔZ) 3-méthoxy 3-oxo propényl] cyclopropane carboxylate de 2-fluoro 2(ΔZ) butényle;
- le 1R, cis 2,2-diméthyl 3[1-(ΔZ) 3-méthoxy 3-oxo propényl] cyclopropane carboxylate de 2-fluoro 2(ΔE) butényle;
- le 1R, cis 2,2-diméthyl 3[1-(ΔZ) 3-méthoxy 3-oxo propényl] cyclopropane carboxylate de [1(RS) cyano 2-méthyl] 2(ΔE) pentényle;
- le 1R, cis 2,2-diméthyl 3[(ΔE) 2-fluoro 3-oxo 3-éthoxy propényl] cyclopropane carboxylate de 2-fluoro 3-méthyl 2-butèn 1-yle;
- le 1R, cis 2,2-diméthyl 3[(ΔE) 2-fluoro 3-éthoxy 3-oxo 1-propényl] cyclopropane carboxylate de 1-éthynyl 2-méthyl ΔE pentèn 2-yle (isomère A);
- le 1R, cis 2,2-diméthyl 3[(ΔE) 2-fluoro 3-oxo 3-éthoxy propényl] cyclopropane carboxylate de 1-éthynyl 2-méthyl ΔE pentèn 2-yle (isomère B);
- le 1R, cis 2,2-diméthyl 3[(ΔZ) 3-oxo 3-terbuto-xypropényl] cyclopropane carboxylate de 1(RS) éthynyl 2-méthyl hex 2(ΔE) en 5-ynyle;
- le 1R, cis 2,2-diméthyl 3[(ΔE) 2-fluoro 3-oxo 3-éthoxy propényl] cyclopropane carboxylate de 1(RS) éthynyl 2-méthyl hex 2(ΔE) en 5-ynyle;
- le 1R, cis 2,2-diméthyl 3[(ΔZ) 3-méthoxy 3-oxo 1-propényl] cyclopropane carboxylate de1(RS) éthynyl 2-méthyl hex 2(ΔE) en 5-ynyle;
- le 1R, cis 2,2-diméthyl 3[(ΔE) 3-éthoxy 3-oxo 2-fluoro 1-propényl] cyclopropane carboxylate de 2-fluoro 2(ΔZ) butényle;
- le 1R, cis 2,2-diméthyl 3[(ΔE) 3-éthoxy 3-oxo 2-fluoro 1-propényl] cyclopropane carboxylate de 2-fluoro 2(ΔE) butényle;
- le 1R, cis 2,2-diméthyl 3[(ΔE) 2-fluoro 3-oxo 3-éthoxy propényl] cyclopropane carboxylate de (RS) 2-méthyl 2-pentényle;
- le 1R, cis 2,2-diméthyl 3[(ΔE) 2-fluoro 3-oxo 3-éthoxy propényl] cyclopropane carboxylate de (RS) cyano 2-fluoro 3-méthyl 2-butényle;
- le 1R, cis 2,2-diméthyl 3[(ΔE) 2-fluoro 3-éthoxy 3-oxo 1-propényl] cyclopropane carboxylate d'α 2-méthyl 2E-butényle;
- le 1R, cis 2,2-diméthyl 3[(ΔZ) 3-méthoxy 3-oxo 1-propényl] cyclopropane carboxylate de (RS) 1-éthynyl 2-fluoro 3-méthyl 2-butényle;
- le 1R, cis 2,2-diméthyl 3[(ΔZ) 3-éthoxy 3-oxo 1-propényl] cyclopropane carboxylate de (RS) 1-éthynyl 2-fluoro 3-méthyl 2-butényle;
- le 1R, cis 2,2-diméthyl 3[(ΔE) 3-méthoxy 3-oxo 2-fluoro 1-propényl] cyclopropane carboxylate de (RS) 1-éthynyl 2-fluoro 3-méthyl 2-butényle;
- le 1R, cis 2,2-diméthyl 3[(ΔE) 3-éthoxy 3-oxo 2-fluoro 1-propényl] cyclopropane carboxylate de (RS) 1-éthynyl 2-fluoro 3-méthyl 2-butényle;
- le 1R, cis 2,2-diméthyl 3[(ΔE) 3-méthoxy 3-oxo 2-bromo 1-propényl] cyclopropane carboxylate de (1RS) 1-éthynyl 2-méthyl 2-pentényle;
- le 1R, cis 2,2-diméthyl 3[(ΔE) 3-méthoxy 3-oxo 2-bromo 1-propényl] cyclopropane carboxylate de (RS) 1-éthynyl 2-méthyl hex 2-en 5-ynyle;
- le 1R, cis 2,2-diméthyl 3[(ΔE) 3-méthoxy 3-oxo 2-chloro 1-propényl] cyclopropane carboxylate de (1RS) 1-éthynyl 2-méthyl 2-pentényle;
- le 1R, cis 2,2-diméthyl 3[(ΔE) 3-méthoxy 3-oxo 2-chloro 1-propényl] cyclopropane carboxylate de (RS) 1-éthynyl 2-méthyl hex 2-en 5-ynyle;
-. le 1R, cis 2,2-diméthyl 3[(ΔE) 3-éthoxy 3-oxo 2-bromo 1-propényl] cyclopropane carboxylate de (1RS) 1-éthynyl 2-méthyl 2-pentényle;
- le 1R, cis 2,2-diméthyl 3[(ΔE) 3-éthoxy 3-oxo 2-bromo 1-propényl] cyclopropane carboxylate de (1RS) 1-éthynyl 2-méthyl hex 2-en 5-ynyle;
- le 1R, cis 2,2-diméthyl 3[(ΔE) 3-éthoxy 3-oxo 2-chlor 1-propényl] cyclopropane carboxylate de (1RS) 1-éthynyl 2-méthyl 2-pentényle;
- le 1R, cis 2,2-diméthyl 3[(ΔE) 3-éthoxy 3-oxo 2-chloro 1-propényl] cyclopropane carboxylate de (1RS) 1-éthynyl 2-méthyl hex 2-en 5-ynyle;
- le 1R, cis 2,2-diméthyl 3[(ΔE) 3-terbutoxy 3-oxo 2-bromo 1-propényl] cyclopropane carboxylate de (1RS) 1-éthynyl 2-méthyl 2-pentényle;
- le 1R, cis 2,2-diméthyl 3[(ΔE) 3-terbutoxy 3-oxo 2-bromo 1-propényl] cyclopropane carboxylate de (1RS) 1-éthynyl 2-méthyl hex 2-en 5-ynyle;
- le 1R, cis 2,2-diméthyl 5[(ΔE) 3-terbutoxy 3-oxo 2-chloro 1-propényl] cyclopropane carboxylate de (1RS) 1-éthynyl 2-méthyl 2-pentényle;
- le 1R, cis 2,2-diméthyl 3[(ΔE) 3-terbutoxy 3-oxo 2-chloro 1-propényl] cyclopropane carboxylate de (1RS) 1-éthynyl 2-méthyl hex 2-en 5-ynyle;
- le 1R, cis 2,2-diméthyl 3[(ΔZ) 3-éthoxy 3-oxo 1-propényl] cyclopropane carboxylate de 1-méthyl 2-E pentényle;
- le 1R, cis 2,2-diméthyl 3[(ΔZ) 3-éthoxy 3-oxo 1-propényl] cyclopropane carboxylate de 1-éthynyl 2-méthyl 2-E pentényle;
- le 1R, cis 2,2-diméthyl 3[(ΔZ) 3-isopropoxy 3-oxo 1-propényl] cyclopropane carboxylate de 1-éthynyl 2-méthyl 2-E pentényle;
- le 1R, cis 2;2-diméthyl 3[(ΔZ) 3-méthoxy 3-oxo 1-propényl] cyclopropane carboxylate de 1-éthynyl 2-méthyl 2-E pentényle;
- le 1R, cis 2,2-diméthyl 3[(ΔZ) 3-éthoxy 3-oxo 1-propényl] cyclopropane carboxylate de 1-éthyl 2-méthyl 2-E pentényle;
- le 1R, cis 2,2-diméthyl 3[(ΔE) 2-fluoro 3-éthoxy 3-oxo 1-propényl] cyclopropane carboxylate de 1-éthyl 2-méthyl 2-E pentényle;
- le 1R, cis 2,2-diméthyl 3[(ΔE) 2-fluoro 3-mé-thoxy 3-oxo 1-propényl] cyclopropane carboxylate de 2-méthyl 2-E pentényle;
- le 1R, cis 2,2-diméthyl 3[(ΔE) 2-fluoro 3-éthé-nyloxy 3-oxo 1-propényl] cyclopropane carboxylate de 2-méthyl 2-E pentényle;
- le 1R, cis 2,2-diméthyl 3[(ΔE) 2-fluoro 3-ter-butoxy 3-oxo 1-propényl] cyclopropane carboxylate de 2-méthyl 2-E pentényle;
- le 1R, cis 2,2-diméthyl 3[(ΔE) 2-fluoro 3-éthoxy 3-oxo 1-propényl] cyclopropane carboxylate de 1-éthynyl 2-méthyl 2-E pentényle;
- le 1R, cis 2,2-diméthyl 3[(ΔZ) 3-éthoxy 3-oxo 1-propényl] cyclopropane carboxylate de 2-méthyl 2-E pentényle;

- le 1R, cis 2,2-diméthyl 3[(ΔE) 2-fluoro 3-éthoxy 3-oxo 1-propényl] cyclopropane carboxylate de 1-éthynyl 2-méthyl 2-E penténýle;
- le 1R, cis 2,2-diméthyl 3[(ΔZ) 3-méthoxy 3-oxo 1-propényl] cyclopropane carboxylate de 2-méthyl 2-E penténýle;
- le 1R, cis 2,2-diméthyl 3[(ΔE) 2-fluoro 3-éthoxy 3-oxo 1-propényl] cyclopropane carboxylate de 3-méhyl 2-penténýle;
- le 1R, cis 2,2-diméthyl 3[(ΔZ) 3-éthoxy 3-oxo 1-propényl] cyclopropane carboxylate de 2-méthyl 2-propényle;
- le 1R, cis 2,2-diméthyl 3[(ΔZ) 3-isopropoxy 3-oxo 1-propényl] cyclopropane carboxylate de 2-méthyl 2-propényle;
- le 1R, cis 2,2-diméthyl 3[(ΔE) 2-fluoro 3-isopropoxy 3-oxo 1-propényl] cyclopropane carboxylate de 2-méthyl 2-E penténýle;
- le 1R, cis 2,2-diméthyl 3[(ΔZ) 3-isopropoxy 3-oxo 1-propényl] cyclopropane carboxylate de 2-méthyl 2-E penténýle;
- le 1R, cis 2,2-diméthyl 3[(ΔZ) 3-éthényloxy 3-oxo 1-propényl] cyclopropane carboxylate de 2-méthyl 2-E penténýle.

Le 1-éthynyl 2-fluoro 3-méthyl 2-buténol utilisé comme produit de départ est préparé comme suit.

On place 120 cm3 de suspension de bromure d'éthynyl magnésium dans le tétrahydrofuranne, ajoute à 0°C une solution de 2,5 g de 3-méthyl 2-fluoro 2-buténol, agite pendant 17 heures à 20°C, ajoute à 0°C une solution aqueuse saturée de chlorure d'ammonium, extrait à l'éther, lave la phase organique à l'eau, concentre à sec, chromatographie le résidu sur silice en éluant par un mélange d'hexane et d'acétate d'éthyle (1/1) et obtient 963 mg de produit recherché.

*Spectre IR* (chloroforme)
absorption à 3990 $cm^{-1}$ attribué à -OH
absorption à 3300 et 3130 $cm^{-1}$ attribués à
C≡C Ⓗ et C≡C.

| Exemples | Y | Z | $R_1$ | E ou Z | $R_2$ | $R_3$ | $R_4$ | $R_5$ | Constantes |
|---|---|---|---|---|---|---|---|---|---|
| 4 | H | O | 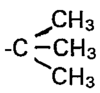 | Z | C≡N | F | $CH_3$ | $CH_3$ | $[\alpha]_D^{20} = +99°$ (0,5% $CHCl_3$)<br>Rf. 0,35 (n-hex 9 AcOEt 1) |
| 5 | H | O | $-CH_3$ | Z | H | H | $CH_3$ | $CH_3$ | $[\alpha]_D = +76°$ (c = 1% $CHCl_3$) |
| 6 | H | O | 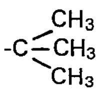 | Z | H | F | $CH_3$ | $CH_3$ | $[\alpha]_D = +75{,}5°$ (c = 0,8% $CHCl_3$) |
| 7 | H | O | $CH_3$ | Z | H | F | $CH_3$ | $CH_3$ | $[\alpha]_D = +70°$ (c = 0,5% $CHCl_3$) |
| 8 | H | O | $CH_3$ | Z | H | $CH_3$ | H | H | |
| 9 | F | O | $C_2H_5$ | E | H | $CH_3$ | H | H | |
| 10 | H | O | $CH_3$ | Z | H | $CH_3$ | $CH_3$ | H | |
| 11 | H | O | $CH_3$ | Z | H | H | H | H | $[\alpha]_D = +84{,}5°$ (c = 0,5% $CHCl_3$) |
| 12 | H | O | $CH_3$ | Z | H | H | H | $CH_3$ | $[\alpha]_D = +80{,}5°$ (c = 1% $CHCl_3$) |
| 13 | H | O | $CH_3$ | Z | H | H | Cl | Cl | $[\alpha]_D = +75°$ (c = 0,5% $CHCl_3$) |
| 14 | H | O | $CH_3$ | Z | H | F | H | $CH_3$ | $[\alpha]_D = +75{,}5 \pm 2°$ (1,5% $CHCl_3$)<br>Rf 0,30 (hexane 8 Etiso 2)<br>Isomère A |
| 15 | H | O | $CH_3$ | Z | H | F | $CH_3$ | H | $[\alpha]_D = +82 \pm 3°$ (0,8 $CHCl_3$)<br>Rf 0,31 (hexane 8 Etiso 2)<br>Isomère B |
| 16 | H | O | $CH_3$ | Z | C≡N | $CH_3$ | H | $C_2H_5$ | Analyse $C_{17}H_{23}NO_4$<br>Calculé C 66,8 H 7,6 N 4,6<br>Trouvé C 67,0 H 7,8 N 4,4 |
| 17 | F | O | $C_2H_5$ | E | H | F | $CH_3$ | $CH_3$ | $[\alpha]_D = +38{,}5°$ (c = 1,2% $CHCl_3$) |
| 18 | F | O | $C_2H_5$ | E | C≡CH | $CH_3$ | H | $C_2H_5$ | $[\alpha]_D = +38 \pm 2°$ (c = 0,5% $CHCl_3$)<br>Rf 0,35 (hexane 9 ACOEt1) |
| 19 | F | O | $C_2H_5$ | E | C≡CH | $CH_3$ | H | $C_2H_5$ | $[\alpha]_D = +53 \pm 2°5$ (c = 0,6% $CHCl_3$)<br>Rf 0,30 (hexane 9 ACOEt1) |
| 20 | H | O | $CH_3$ | Z | C≡CH | $CH_3$ | H | $-CH_2C≡CH$ | $[\alpha]_D = +73 \pm 3°5$ (0,4% $CHCl_3$) |
| 21 | H | O | 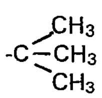 | Z | C≡CH | $CH_3$ | H | $-CH_2-C≡CH$ | $[\alpha]_D = +77 \pm 2°$ (0,9% $CHCl_3$) |

| Exemples | Y | Z | $R_1$ | E ou Z | $R_2$ | $R_3$ | $R_4$ | $R_5$ | Constantes |
|---|---|---|---|---|---|---|---|---|---|
| 22 | F | O | $C_2H_5$ | E | $C\equiv CH$ | $CH_3$ | H | $-CH_2-C\equiv CH$ | $[\alpha]_D = +49,5 \pm 2°$ (0,5% $CHCl_3$)<br>Rf 0,25 (hexane 9 ACOEt1) |
| 23 | F | O | $C_2H_5$ | E | H | F | $CH_3$ | H | $[\alpha]_D = +40,5 \pm 4°$ (0,3% $CHCl_3$)<br>Rf 0,32 (hexane 8 Etiso2) |
| 24 | F | O | $C_2H_5$ | E | H | F | $CH_3$ | H | $[\alpha]_D = +47,5 \pm 4°$ (0,3% $CHCl_3$) |
| 25 | F | O | $C_2H_5$ | E | H | $CH_3$ | H | $C_2H_5$ | $[\alpha]_D = +40,5 \pm 2°$ (0,8% $CHCl_3$)<br>Rf 0,65 (n-hexane 9 ACOEt1) |
| 26 | F | O | $C_2H_5$ | E | $C\equiv N$ | F | $CH_3$ | $CH_3$ | $[\alpha]_D^{20} = +69°$ (0,75% $CHCl_3$)<br>Rf 0,22 (n-hexane 86-ACOEt 15) |
| 27 | F | O | $C_2H_5$ | E | H | $CH_3$ | H | $CH_3$ | |
| 28 | H | O | $CH_3$ | Z | $C\equiv CH$ | F | $CH_3$ | $CH_3$ | |
| 29 | H | O | $C_2H_5$ | Z | $C\equiv CH$ | F | $CH_3$ | $CH_3$ | |
| 30 | F | O | $CH_3$ | E | $C\equiv CH$ | F | $CH_3$ | $CH_3$ | |
| 31 | F | O | $C_2H_5$ | E | $C\equiv CH$ | F | $CH_3$ | $CH_3$ | |
| 32 | Br | O | $CH_3$ | E | $C\equiv CH$ | $CH_3$ | H | $C_2H_5$ | |
| 33 | Br | O | $CH_3$ | E | $C\equiv CH$ | $CH_3$ | H | $-CH_2-C\equiv CH$ | |
| 34 | Cl | O | $CH_3$ | E | $C\equiv CH$ | $CH_3$ | H | $C_2H_5$ | |
| 35 | Cl | O | $CH_3$ | E | $C\equiv CH$ | $CH_3$ | H | $-CH_2-C\equiv CH$ | |
| 36 | Br | O | $C_2H_5$ | E | $C\equiv CH$ | $CH_3$ | H | $C_2H_5$ | |
| 37 | Br | O | $C_2H_5$ | E | $C\equiv CH$ | $CH_3$ | H | $-CH_2-C\equiv CH$ | |
| 38 | Cl | O | $C_2H_5$ | E | $C\equiv CH$ | $CH_3$ | H | $C_2H_5$ | |
| 39 | Cl | O | $C_2H_5$ | E | $C\equiv CH$ | $CH_3$ | H | $-CH_2-C\equiv CH$ | |
| 40 | Br | O | $C(CH_3)_3$ | E | $C\equiv CH$ | $CH_3$ | H | $C_2H_5$ | |
| 41 | Br | O | $C(CH_3)_3$ | E | $C\equiv CH$ | $CH_3$ | H | $-CH_2-C\equiv CH$ | |
| 42 | Cl | O | $C(CH_3)_3$ | E | $C\equiv CH$ | $CH_3$ | H | $C_2H_5$ | |
| 43 | Cl | O | $C(CH_3)_3$ | E | $C\equiv CH$ | $CH_3$ | H | $-CH_2-C\equiv CH$ | |
| 44 | H | O | $C_2H_5$ | Z | $C\equiv CH$ | $CH_3$ | H | $C_2H_5$ | |
| 45 | H | O | $-CH<^{CH_3}_{CH_3}$ | Z | $C\equiv CH$ | $CH_3$ | H | $C_2H_5$ | |
| 46 | H | O | $CH_3$ | Z | $C\equiv CH$ | $CH_3$ | H | $C_2H_5$ | |
| 47 | H | O | $C_2H_5$ | Z | $CH_3$ | H | H | $C_2H_5$ | |
| 48 | H | O | $C_2H_5$ | Z | $C_2H_5$ | $CH_3$ | H | $C_2H_5$ | |
| 49 | F | O | $C_2H_5$ | E | $C_2H_5$ | $CH_3$ | H | $C_2H_5$ | |
| 50 | F | O | $CH_3$ | E | H | $CH_3$ | H | $C_2H_5$ | $[\alpha]_D = +46,5 \pm 5°$ (0,7% $CHCl_3$) |
| 51 | F | O | $CH=CH_2$ | E | H | $CH_3$ | H | $C_2H_5$ | $[\alpha]_D = +44 \pm 1°$ (1% $CHCl_3$) |
| 52 | F | O | tBu | E | H | $CH_3$ | H | $C_2H_5$ | $[\alpha]_D = +57 \pm 2,5°$ (0,4% $CHCl_3$) |
| 53 | F | O | $C_2H_5$ | E | $C\equiv CH$ | $CH_3$ | H | $C_2H_5$ | |
| 54 | H | O | $C_2H_5$ | Z | H | $CH_3$ | H | $C_2H_5$ | |
| 55 | F | O | $C_2H_5$ | E | $C\equiv CH$ | $CH_3$ | H | $C_2H_5$ | |
| 56 | H | O | $CH_3$ | Z | H | $CH_3$ | H | $C_2H_5$ | |
| 57 | F | O | $C_2H_5$ | E | H | H | $CH_3$ | $CH_3$ | |
| 58 | H | O | $C_2H_5$ | Z | H | $CH_3$ | H | H | |
| 59 | H | O | $CH<^{CH_3}_{CH_3}$ | Z | H | $CH_3$ | H | H | |

| Exemples | Y | Z | $R_1$ | E ou Z | $R_2$ | $R_3$ | $R_4$ | $R_5$ | Constantes |
|---|---|---|---|---|---|---|---|---|---|
| 60 | F | O | $CH\langle^{CH_3}_{CH_3}$ | E | H | $CH_3$ | $C_2H_5$ | H | |
| 61 | H | O | $CH\langle^{CH_3}_{CH_3}$ | Z | H | $CH_3$ | $C_2H_5$ | H | |
| 62 | H | O | $CH=CH_2$ | Z | H | $CH_3$ | $C_2H_5$ | H | |

*Exemple 63*

*Préparation d'un concentré soluble*

On effectue un mélange homogène de:

| | | |
|---|---|---|
| - produit de l'exemple 20 | 0,25 | g |
| - butoxyde de pipéronyle | 1,00 | g |
| - tween 80* | 0,25 | g |
| - topanol A** | 0,1 | g |
| - eau | 98,4 | g |

* tween 80: p 985 9è édition de l'index Merck

** topanol A: 2,4-diméthyl 6-terbutyl phénol

*Exemple 64*

*Préparation d'un concentré émulsifiable*

On mélange intimement:

| | | |
|---|---|---|
| - produit de l'exemple 17 | 0,015 | g |
| - butoxyde de pipéronyle | 0,5 | g |
| - topanol A | 0,1 | g |
| - tween 80 | 3,5 | g |
| - xylène | 95,885 | g |

*Exemple 65*

*Préparation d'un concentré émulsifiable*

On effectue un mélange homogène de:

| | | |
|---|---|---|
| - produit de l'exemple 7 | 1,5 | g |
| - tween 80 | 20,00 | g |
| - topanol A | 0,1 | g |
| - xylène | 78,4 | g |

*Exemple 66*

*Préparation d'une composition fumigène*

On mélange d'une façon homogène:

| | | |
|---|---|---|
| - produit de l'exemple 6 | 0,25 | g |
| - poudre de tabu* | 25,00 | g |
| - poudre de feuille de cèdre | 40,00 | g |
| - poudre de bois de pin | 33,75 | g |
| - vert brillant | 0,5 | g |
| - p-nitrophénol | 0,5 | g |

* poudre de feuilles de Machylus Thumbergii

*Etude de l'activité insecticide et de l'activité acaricide des composés de formule (I).*

a) *Etude de l'effet létal sur blatte*

Les tests sont effectués par contact sur film par dépôt à la pipette, de solutions acétoniques de différents concentrations sur fond de boîte de Petri en verre dont les bords ont été préalablement talqués afin d'éviter la fuite des insectes. On détermine la concentration létale 50 (CL 50).

On a obtenu le résultat suivant:

| *Composé de l'exemple* | *CL 50 en mg/m2* |
|---|---|
| 6 | 3,27 |
| 27 | 0,9 |
| 53 | 0,4 |

b) *Etude de l'effet d'abattage sur mouche domestique*

Les insectes tests sont des mouches domestiques femelles âgées de 4 jours. On opère par pulvérisation directe à la concentration de 0,25 g/l en chambre de Kearns et March en utilisant comme solvant un mélange d'acétone (5%) et d'Isopar L (solvant pétrolier) (quantité de solvant utilisée 2 ml en une seconde). On utilise 50 insectes par traitement. On effectue les contrôles toutes lers minutes jusqu'à 10 minutes, puis à 15 minutes et l'on détermine le KT 50 par les méthodes habituelles.

On a obtenu les résultats suivants:

| *Composé de l'exemple* | *KT 50 en mn* |
|---|---|
| 7 | 4,78 |
| 9 | 4,78 |
| 17 | 4,68 |
| 20 | 1,74 |
| 27 | 1,28 |
| 56 | 2,86 |

c) *Etude de l'effet létal sur Aphis Cracivora*

On utilise des adultes de 7 jours et l'on emploie 10 Aphis par concentration utilisée. On utilise une méthode de contact-ingestion. On effectue le traitement au pistolet de Fischer d'une feuille de fève que l'on dépose dans une boîte de Petri en manière plastique sur une rondelle de papier humidifiée. Le traitement est effectué à l'aide de 2 ml de solution acétonique de produit à tester (1 ml) par face de feuille). L'infestation par les insectes est effectuée après séchage de la feuille. On maintient les insectes en contact avec la feuille pendant une heure puis on place les insectes sur des feuilles non traitées et contrôle la mortalité au bout de 24 heures. On détermine le CL 50 en mg/l.

On a obtenu le résultat suivant:

| *Composé de l'exemple* | *CL 50 en mg/l* |
|---|---|
| 20 | 4,37 |
| 18 | 5,24 |
| 22 | 3,26 |

**Revendications pour les Etats:**
BE, CH, DE, GB, IT, LI, LU, NL, SE

1. Sous toutes leurs formes stéréoisomères isolées ou en mélanges, les composés de formule générale (I):

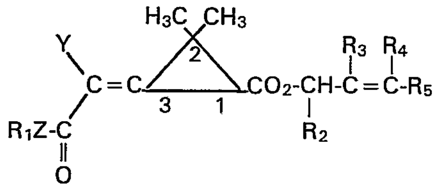
(I)

dans laquelle Y représente un atome d'hydrogène, de fluor, de chlore ou de brome, Z représente un atome d'oxygène ou de soufre, $R_1$ représente ou bien un radical alcoyle linéaire, ramifié ou cyclique, saturé ou insaturé, renfermant de 1 à 8 atomes de carbone, éventuellement substitué par un ou plusieurs groupements fonctionnels, identiques ou différents, ou bien un groupement aryle renfermant de 6 à 14 atomes de carbone, éventuellement substitué par un ou plusieurs groupements fonctionnels identiques ou différents, ou bien un radical hétérocyclique éventuellement substitué par un ou plusieurs groupements fonctionnels, identiques ou différents, $R_2$ représente un atome d'hydrogène, un atome de fluor, de chlore ou de brome, un radical alcoyle renfermant de 1 à 4 atomes de carbone, un groupement $-C \equiv N$ ou un groupement $-C \equiv CH$, $R_3$, $R_4$, $R_5$, identiques ou différents, représentent un atome d'hydrogène, un atome de fluor, de chlore ou de brome, un radical alcoyle linéaire, ramifié ou cyclique, renfermant de 1 à 8 atomes de carbone éventuellement substitué par un ou plusieurs groupements fonctionnels, identiques ou différents, un radical alcényle comportant de 2 à 8 atomes de carbone ou un radical alcynyle comportant de 2 à 8 atomes de carbone ou les radicaux $R_3$, $R_4$ et $R_5$ forment des cycles entre eux deux à deux.

2. Les composés selon la revendication 1, de formule générale ($I_A$):

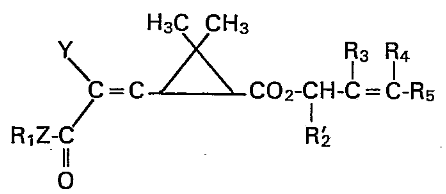
($I_A$)

dans laquelle Y, Z, $R_1$, $R_3$, $R_4$ et $R_5$ conservent les significations de la revendication 1 et $R'_2$ représente un atome d'hydrogène ou un radical éthynyle.

3. Les composés selon la revendication 2 de formule générale ($I_B$):

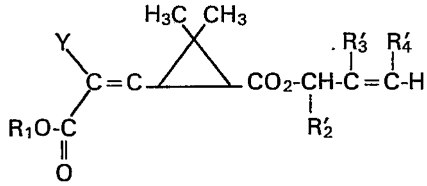
($I_B$)

dans laquelle Y, $R_1$ et $R'_2$ conservent les significations de la revendication 2, $R'_3$ représente un radical alcoyle linéaire, ramifié ou cyclique renfermant de 1 à 8 atomes de carbone et $R'_4$ représente soit un radical alcoyle linéaire, ramifié ou cyclique renfermant de 1 à 8 atomes de carbone, soit un radical alcynyle comportant de 2 à 8 atomes de carbone.

4. Les composés tels que définis à l'une quelconque des revendications 1 à 3 répondant à la formule (I) dans laquelle Y représente un atome d'hydrogène ou de fluor, et la géométrie de la double liaison de la chaîne latérale portée sur le carbone en 3 du cyclopropane est respectivement Z et E.

5. L'un quelconque des composés de formule (I), telle que définie à la revendication 1, dont les noms suivent:

- le 1R, cis 2,2-diméthyl 3-[1(ΔZ) 3-méthoxy 3-oxopropényl] cyclopropane carboxylate de 1(R) ou (S) éthynyl 2-méthyl 2-(ΔE) pentényle;
- le 1R, cis 2,2-diméthyl 3-[(ΔZ) 3-oxo-3-méthoxypropényl] cyclopropane carboxylate de 3-méthyle 2-buténPyle;
- le 1R, cis 2,2-diméthyl 3-[(ΔZ) 3-oxo 3-méthoxypropényl] cyclopropane carboxylate de 2-fluoro 3-méthyl 2-buténPyle;
- le 1R, cis 2,2-diméthyl 3-[1(ΔE) 3-éthoxy 3-oxo 2-fluoropropényl] cyclopropane carboxylate d'α 2-méthyl 2-propényle;
- le 1R, cis 2,2-diméthyl 3-[(ΔZ) 3-oxo 3-méthoxypropényl] cyclopropane carboxylate d'α 2-méthyl 2-E buténPyle;
- le 1R, cis 2,2-diméthyl 3-[(ΔE) 2-fluoro 3-oxo 3-éthoxypropényl] cyclopropane carboxylate de 2-fluoro 3-méthyl 2-buten-1-yle;
- le 1R, cis 2,2-diméthyl 3-[(ΔE) 2-fluoro 3-oxo 3-éthoxypropényl] cyclopropane carboxylate de (RS) 2-méthyl 2-penténPyle;
- le 1R, cis 2,2-diméthyl 3-[(ΔE) 2-fluoro 3-éthoxy 3-oxo 1-propényl] cyclopropane carboxylate d'α 2-méthyl 2-E buténPyle;
- le 1R, cis 2,2-diméthyl 3-[(ΔZ) 3-méthoxy 3-oxo 1-propényl] cyclopropane carboxylate de 1-éthynyl 2-méthyl 2-E penténPyle;
- le 1R, cis 2,2-diméthyl 3-[(ΔE) 2-fluoro 3-éthoxy 3-oxo 1-propényl] cyclopropane carboxylate de 1-éthynyl 2-méthyl 2-E penténPyle;
- le 1R, cis 2,2-diméthyl 3-[(ΔE) 2-fluoro 3-éthoxy 3-oxo 1-propényl] cyclopropane carboxylate de 1-éthényl 2-méthyl ΔE penten-2-yle;
- le 1R, cis 2,2-diméthyl 3-[(ΔZ) 3-méthoxy 3-oxo 1-propényl] cyclopoane carboxylate de 2-méthyl 2-E penténPyle.

6. Procédé de préparation des composés de formule générale (I) tels que définis à la revendication 1, caractérisé en ce que l'on fait réagir un acide de formule générale (II):

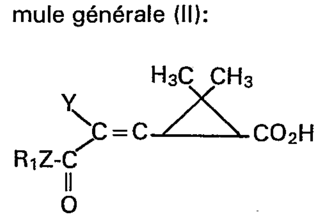
(II)

dans laquelle Y, Z et $R_1$ ont la signification indiquée

à la revendication 1, ou un dérivé fonctionnel de cet acide, sur un alcool de formule générale (III):

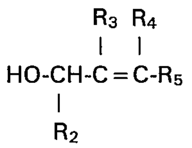

(III)

dans laquelle $R_2$, $R_3$, $R_4$ et $R_5$ ont la signification indiquée à la revendication 1 ou sur un dérivé fonctionnel de cet alcool.

7. Procédé de préparation selon la revendication 6, caractérisé en ce que l'on estérifie l'acide de formule (II) par l'alcool de formule (III) en présence de dicyclohexylcarbodiimide et de 4-diméthylaminopyridine.

8. Les composés de formule (I) tels que définis à l'une quelconque des revendications 1 à 5, pour leur utilisation à la lutte contre les parasites des végétaux, les parasites des locaux et les parasites des animaux à sang chaud.

9. Les compositions destinées à la lutte contre les parasites des végétaux, les parasites des locaux et les parasites des animaux a sang chaud, caractérisées en ce qu'elles renferment comme principe actif au moins un des produits définis à l'une quelconque des revendications 1 à 5.

10. Les compositions insecticides renfermant comme principe actif au moins les produits définis à l'une quelconque des revendications 1 à 5.

11. Les compositions acaricides renfermant comme principe actif au moins l'un des produits définis à l'une quelconque des revendications 1 à 5.

12. Les compositions nématicides renfermant comme principe actif au moins l'un des produits définis à l'une quelconque des revendications 1 à 5.

13. Les compositions acaricides destinées à la lutte contre les parasites des animaux à sang chaud, notamment contre les tiques et les gales, caractérisées en ce qu'elles renferment comme principe actif, au moins l'un des produits définis à l'une quelconque des revendications 1 à 5.

14. Les compositions destinées à l'alimentation animale renfermant comme principe actif au moins l'un des produits définis à l'une quelconque des revendications 1 à 5.

15. Associations douées d'activité insecticide, acaricide ou nématicide, caractérisées en ce qu'elles contiennent comme matière active, d'une part un au moins des composés de formule générale (I) et d'autre part, un au moins des esters pyréthrinoïdes choisis dans le groupe constitué par les esters d'alléthrolones, d'alcool 3,4,5,6-tétrahydrophthalimido méthylique, d'alcool 5-benzyl 3-furyl méthylique, d'alcool 3-phénoxy benzylique et d'alcools α-cyano 3-phénoxy benzyliques des acides chrysanthémiques, par les esters d'alcool 5-benzyl 3-furyl méthylique des acides 2,2-diméthyl 3-(2-oxo 3-tétrahydrothiophénylidène mé-thyl) cyclopropane -1-carboxyliques, par les esters d'alcool 3-phénoxy benzylique et d'alcools α-cyano 3-phénoxy benzyliques des acides 2,2-diméthyl 3-(2,2-dichlorovinyl) cyclopropane-1-carboxyliques, par les esters d'alcools α-cyano 3-phénoxy benzyliques d'acides 2,2-diméthyl 3-(2,2-dibromovinyl) cyclopropane-1-carboxyliques, par les esters d'alcool 3-phénoxy benzylique des acides 2-parachlorophényl 2-isopropyl acétiques, par les esters d'alléthrolones, d'alcool 3,4,5,6-tétrahydrophtalimido méthylique, d'alcool 5-benzyl 3-furyl méthylique, d'alcool 3-phénoxy benzylique et d'alcools α-cyano 3-phénoxy benzyliques des acides 2,2-diméthyl 3-(1,2,2,2-tétrahaloéthyl) cyclopropane-1-carboxyliques, dans lesquels «halo» représente un atome de fluor, de chlore ou de brome, étant que les copules acides et alcools des esters pyréthrinoïdes ci-dessus peuvent exister sous toutes leurs formes stéréoisomères possibles.

16. Les compositions et associations selon l'une quelconque des revendications 9 à 15, caractérisées en ce qu'elles renferment, en outre, un synergiste des pyréthrinoïdes.

17. A titre de produits industriels nouveaux, le produit de formule:

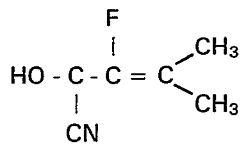

et le produit de formule:

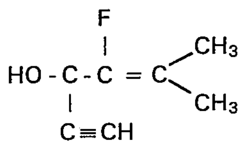

**Revendications pour l'Etat:** AT

1. Procédé pour préparer sous toutes leurs formes stéréoisomères isolées ou en mélanges, les composés de formule générale (I):

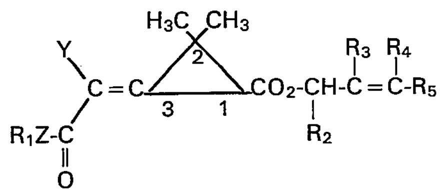

(I)

dans laquelle Y représente un atome d'hydrogène, de fluor, de chlore ou de brome, Z représente un atome d'oxygène ou de soufre, $R_1$ représente ou bien un radical alcoyle linéaire, ramifié ou cyclique, saturé ou insaturé, renfermant de 1 à 8 atomes de carbone, éventuellement substitué par un ou plusieurs groupements fonctionnels, identiques ou différents, ou bien un groupement aryle renfermant de 6 à 14 atomes de carbone, éventuellement substitué par un ou plusieurs groupements fonctionnels identiques ou différents, ou bien un radical hétérocyclique éventuellement substitué par un ou plusieurs groupements fonctionnels, identiques ou différents, $R_2$ représente un atome d'hydrogène, un atome de fluor, de chlore ou de brome, un radical alcoyle renfermant de 1 à 4 atomes de carbone, un groupement -C≡N ou un groupement -C≡CH, $R_3$, $R_4$, $R_5$, identiques ou différents, représentent un atome d'hydrogène, un atome de fluor, de chlore ou de brome, un radical alcoyle linéaire, ramifié ou cyclique, renfermant de 1 à 8 atomes de carbone éventuellement substitué par un ou plusieurs groupements fonctionnels, identiques ou différents, un radical alcényle comportant de 2 à 8 atomes de carbone ou un radical alcynyle comportant de 2 à 8 atomes de carbone, ou les radicaux $R_3$, $R_4$ et $R_5$ forment des cycles entre eux deux à deux, caractérisé en ce que l'on fait réagir un acide de formule générale (II):

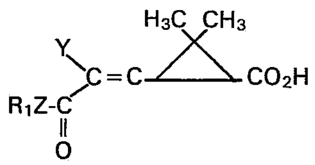

(II)

dans laquelle Y, Z et $R_1$ ont la signification indiquée précédemment, ou un dérivé fonctionnel de cet acide, sur un alcool de formule générale (III):

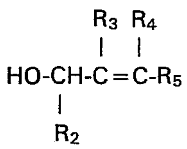

(III)

dans laquelle $R_2$, $R_3$, $R_4$ et $R_5$ ont la signification indiquée précédemment ou sur un dérivé fonctionnel de cet alcool.

2. Procédé selon la revendication 1, pour la préparation des composés de formule (I) telle que définie à la revendication 1, dans laquelle Y, Z, $R_1$, $R_3$, $R_4$ et $R_5$ sont définis comme à la revendication 1 et $R_2$ représente un atome d'hydrogène, un atome de fluor, de chlore ou de brome, un groupement $-C\equiv CN$ ou $-C\equiv CH$, caractérisé en ce que l'on utilise au départ un composé de formule (II) telle que définie à la revendication 1 et un composé de formule (III) dans laquelle $R_2$, $R_3$, $R_4$ et $R_5$ sont définis comme ci-dessus.

3. Procédé de préparation selon la revendication 1 ou 2, caractérisé en ce que l'on estérifie l'acide de formule (II) par l'alcool de formule (III) en présence de dicyclohexylcarbodiimide et de 4-diméthylaminopyridine.

4. Procédé selon la revendication 2, pour la préparation des composés de formule (I), telle que définie à la rtevendication 1, répondant à la formule ($I_A$):

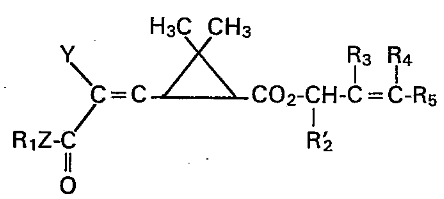

($I_A$)

dans laquelle Y, Z, $R_1$, $R_3$, $R_4$ et $R_5$ conservent les significations de la revendications 1 et $R'_2$ représente un atome d'hydrogène ou un radical éthynyle, caractérisé en ce que l'on utilise au départ un composé de formule (III) dans laquelle $R_2$ représente un atome d'hydrogène ou un radical éthynyle.

5. Procédé selon la revendication 2, pour la préparation des composés de formule (I), telle que définie à la revendication 1, répondant à la formule ($I_B$):

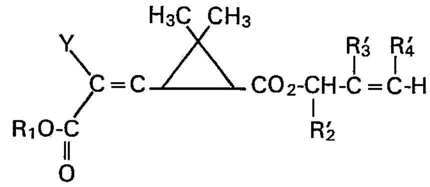

($I_B$)

dans laquelle Y, $R_1$ et $R'_2$ conservent les significations de la revendication 2, $R'_3$ représente un radical alcoyle linéaire, ramifié ou cyclique renfermant de 1 à 8 atomes de carbone et $R'_4$ représente soit un radical alcoyle linéaire, ramifié ou cyclique renfermant de 1 à 8 atomes de carbone, soit un radical alcynyle comportant de 2 à 8 atomes de carbone, caractérisé en ce que l'on utilise au départ un composé de formule (II) dans laquelle Y et $R_1$ sont définis comme précédemment et Z représente un atome d'oxygène et un composé de formule (III) dans laquelle $R_2$ représente un atome d'hydrogène ou un radical éthynyle, $R_3$ représente un radical alcoyle linéaire, ramifié ou cyclique renfermant de 1 à 9 atomes de carbone et $R_4$ représente soit un radical alcoyle linéaire, ramifié ou cyclique renfermant de 1 à 8 atomes de carbone, soit un radical alcynyle comportant de 2 à 8 atomes de carbone.

6. Procédé selon la revendication 2, 4 ou 5, caractérisé en ce que l'on utilise au départ un composé de formule (II), dans laquelle Y représente un atome d'hydrogène ou de fluor et la géométrie de la double liaison de la chaîne latérale portée sur le carbone en 3 du cyclopropane est respectivement Z ou E.

7. Procédé selon la revendication 1, caractérisé en ce que l'on choisit au départ les composés de formule (II) et (III) de manière telle que l'on prépare l'un quelconque des comnposés de formule (I), telle que définie à la revendication 1, dont les noms suivent:

- le 1R, cis 2,2-diméthyl 3-[1(ΔZ) 3-méthoxy 3-oxopropényl] cyclopropane carboxylate de 1(R) ou (S) éthynyl 2-méthyl 2-(ΔE) penténlyle;
- le 1R, cis 2,2-diméthyl 3-[(ΔZ) 3-oxo-3-méthoxypropényl] cyclopropane carboxylate de 3-méthyle 2-buténlyle;
- le 1R, cis 2,2-diméthyl 3-[(ΔZ) 3-oxo 3-méthoxypropényl] cyclopropane carboxylate de 2-fluoro 3-méthyl 2-buténlyle;
- le 1R, cis 2,2-diméthyl 3-[1(ΔE) 3-éthoxy 3-oxo 2-fluoropropényl] cyclopropane carboxylate d'α 2-méthyl 2-propénlyle;
- le 1R, cis 2,2-diméthyl 3-[(ΔZ) 3-oxo 3-méthoxypropényl] cyclopropane carboxylate d'α 2-méthyl 2-E buténlyle;
- le 1R, cis 2,2-diméthyl 3-[(ΔE) 2-fluoro 3-oxo 3-éthoxypropényl] cyclopropane carboxylate de 2-fluoro 3-méthyl 2-buten-1-yle;
- le 1R, cis 2,2-diméthyl 3-[(ΔE) 2-fluoro 3-oxo 3-éthoxypropényl] cyclopropane carboxylate de (RS) 2-méthyl 2-penténlyle;
- le 1R, cis 2,2-diméthyl 3-[(ΔE) 2-fluoro 3-éthoxy 3-oxo 1-propényl] cyclopropane carboxylate d'α 2-méthyl 2-E buténlyle;

- le 1R, cis 2,2-diméthyl 3-[(ΔZ) 3-méthoxy 3-oxo 1-propényl] cyclopropane carboxylate de 1-éthynyl 2-méthyl 2-E penténnyle;
- le 1R, cis 2,2-diméthyl 3-[(ΔE) 2-fluoro 3-éthoxy 3-oxo 1-propényl] cyclopropane carboxylate de 1-éthynyl 2-méthyl 2-E penténnyle;
- le 1R, cis 2,2-diméthyl 3-[(ΔE) 2-fluoro 3-éthoxy 3-oxo 1-propényl] cyclopropane carboxylate de 1-éthényl 2-méthyl ΔE penten-2-yle;
- le 1R, cis 2,2-diméthyl 3-[(ΔZ) 3-méthoxy 3-oxo 1-propényl] cycloproane carboxylate de 2-méthyl 2-E penténnyle.

8. Les compositions destinées à la lutte contre les parasites des végétaux, les parasites des locaux et les parasites des animaux à sang chaud, caractérisées en ce qu'elles renferment comme principe actif au moins un des produits définis à l'une quelconque des revendications 1, 2 et 4 à 7.

9. Les compositions insecticides renfermant comme principe actif au moins l'un des produits définis à l'une quelconque des revendications 1, 2 et 4 à 7.

10. Les compositions acaricides renfermant comme principe actif au moins l'un des produits définis à l'une quelconque des revendications 1, 2 et 4 à 7.

11. Les compositions nématicides renfermant comme principe actif au moins l'un des produits définis à l'une quelconque des revendications 1, 2 et 4 à 7.

12. Les compositions acaricides destinées à la lutte contre les parasites des animaux à sang chaud, notamment contre les tiques et les gales, caractérisées en ce qu'elles renferment comme principe actif, au moins l'un des produits définis à l'une quelconque des revendications 1, 2 et 4 à 7.

13. Les compositions destinées à l'alimentation animale renfermant comme principe actif au moins l'un des produits définis à l'une quelconque des revendications 1, 2 et 4 à 7.

14. Compositions douées d'activité insecticide, acaricide ou nématicide, caractérisées en ce qu'elles contiennent comme matière active, d'une part un au moins des composés de formule générale (I) et d'autre part, un au moins des esters pyréthrinoïdes choisis dans le groupe constitué par les esters d'alléthrolones, d'alcool 3,4,5,6-tétrahydrophthalimido méthylique, d'alcool 5-benzyl 3-furyl méthylique, d'alcool 3-phénoxy benzylique et d'alcools α-cyano 3-phénoxy benzyliques des acides chrysanthémiques, par les esters d'alcool 5-benzyl 3-furyl méthylique des acides 2,2-diméthyl 3-(2-oxo 3-tétrahydrothiophénylidène méthyl) cyclopropane-1-carboxyliques, par les esters d'alcool 3-phénoxy benzylique et d'alcools α-cyano 3-phénoxy benzyliques des acides 2,2-diméthyl 3-(2,2-dichlorovinyl) cyclopropane-1-carboxyliques, par les esters d'alcools α-cyano 3-phénoxy benzyliques d'acides 2,2-diméthyl 3-(2,2-dibromovinyl) cyclopropane-1-carboxyliques, par les esters d'alcool 3-phénoxy benzylique des acides 2-parachlorophényl 2-isopropyl acétiques, par les esters d'alléthrolones, d'alcool 3,4,-5,6-tétrahydrophtalimido méthylique, d'alcool 5-benzyl 3-furyl méthylique, d'alcool 3-phénoxy benzylique et d'alcools α-cyano 3-phénoxy benzyliques des acides 2,2-diméthyl 3-(1,2,2,2-tétrahaloéthyl) cyclopropane-1-carboxyliques, dans lesquels «halo» représente un atome de fluor, de chlore ou de brome, étant entendu que les copules acides et alcools des esters pyréthrinoïdes ci-dessus peuvent exister sous toutes leurs formes stéréoisomères possibles.

15. Les compositions et associations selon l'une quelconque des revendications 8 à 14, caractérisées en ce qu'elles renferment, en outre, un synergiste des pyréthrinoïdes.

16. Compositions selon l'une quelconque des revendications 8 à 15, caractérisées en ce qu'elles renferment, à titre de principe actif, l'un au moins des composés de formule (I), telle que définie à la revendication 2.

**Patentansprüche für die Vertragsstaaten:**
BE, CH, DE, GB, IT, LI, LU, NL, SE

1. In sämtlichen ihrer stereoisomeren Formen, isoliert oder im Gemisch, die Verbindungen der allgemeinen Formel (I)

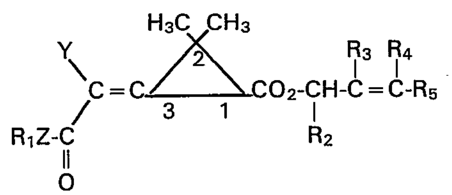

(I)

worin Y ein Wasserstoff-, Fluor-, Chlor- oder Bromatom bedeutet, Z ein Sauerstoff- oder Schwefelatom darstellt, $R_1$ entweder gesättigten oder ungesättigten, linearen, verzweigten oder cyclischen Alkylrest mit 1 bis 8 Kohlenstoffatomen, der gegebenenfalls durch eine oder mehrere gleiche oder verschiedene funktionelle Gruppen substituiert ist, oder eine Arylgruppe mit 6 bis 14 Kohlenstoffatomen, die gegebenenfalls durch eine oder mehrere gleiche oder verschiedene funktionelle Gruppen substituiert ist, oder einen heterocyclischen Rest, der gegebenenfalls durch eine oder mehrere gleiche oder verschiedene funktionelle Gruppen substituiert ist, bedeutet, $R_2$ ein Wasserstoffatom, ein Fluor-, Chlor- oder Bromatom, einen Alkylrest mit 1 bis 4 Kohlenstoffatomen, eine Gruppe $-C{\equiv}N$ oder eine Gruppe $-C{\equiv}CH$ bedeutet, $R_3$, $R_4$, $R_5$, die gleich oder verschieden sind, ein Wasserstoffatom, ein Fluor-, Chlor- oder Bromatom, einen linearen, verzweigten oder cyclischen Alkylrest mit 1 bis 8 Kohlenstoffatomen, der gegebenenfalls durch eine oder mehrere gleiche oder verschiedene funktionelle Gruppen substituiert ist, einen Alkylrest mit 2 bis 8 Kohlenstoffatomen oder einen Alkinylrest mit 2 bis 8 Kohlenstoffatomen bedeuten oder die Reste $R_3$, $R_4$ und $R_5$ paarweise untereinander Ringe bilden.

2. Verbindungen gemäss Anspruch 1 der allgemeinen Formel ($I_A$)

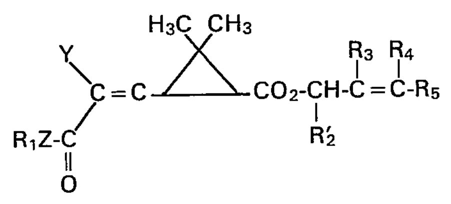

($I_A$)

worin Y, Z, $R_1$, $R_3$, $R_4$ und $R_5$ die in Anspruch 1 angegebene Bedeutung besitzen und R' 2 ein Wasserstoffatom oder einen Ethinylrest bedeutet.

3. Verbindungen gemäss Anspruch 2 der allgemeinen Formel ($I_B$)

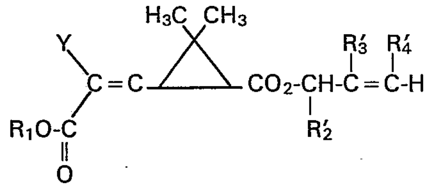

($I_B$)

worin Y, $R_1$ und $R'_2$ die in Anspruch 2 angegebenen Bedeutungen besitzen, $R'_3$ einen linearen, verzweigten oder cyclischen Alkylrest mit 1 bis 8 Kohlenstoffatomen bedeutet und $R'_4$ entweder einen linearen, verzweigten oder cyclischen Alkylrest mit 1 bis 8 Kohlenstoffatomen oder einen Alkinylrest mit 2 bis 8 Kohlenstoffatomen bedeutet.

4. Verbindungen gemäss einem der Ansprüche 1 bis 3 der Formel (I), worin Y ein Wasserstoff- oder Fluoratom bedeutet und die Geometrie der Doppelbindung der von dem Kohlenstoffatom in 3-Stellung des Cyclopropans getragenen Seitenkette die Z- bzw. E-Geometrie ist.

5. Eine der Verbindungen der Formel (I) gemäss Anspruch 1 mit den folgenden Bezeichnungen:

1(R)- oder (S)-Ethinyl-2-methyl-2-(ΔE)-pentenyl-1R,cis-2,2-dimethyl-3-[(ΔZ)-3-methoxy-3-oxo-propenyl]-cyclopropan-carboxylat;

3-Methyl-2-butenyl-1R,cis-2,2-dimethyl-3-[(ΔZ)-3-oxo-3-methoxy-propenyl]-cyclopropan-carboxylat;

2-Fluor-3-methyl-2-butenyl-1R,cis-2,2-dimethyl-3-[(ΔZ)-3-oxo-3-methoxy-propenyl]-cyclopropan-carboxylat;

α-2-Methyl-2-propenyl-1R,cis-2,2-dimethyl-3-[1(ΔE)-3-ethoxy-3-oxo-2-fluor-propenyl]-cyclopropan-carboxylat;

α-2-Methyl-2-E-butenyl-1R,cis-2,2-dimethyl-3-[(ΔZ)-3-oxo-3-methoxy-propenyl]-cyclopropan-carboxylat;

2-Fluor-3-methyl-2-buten-1-yl-1R,cis-2,2-dimethyl-3-[(ΔE)-2-fluor-3-oxo-3-ethoxy-propenyl]-cyclopropan-carboxylat;

(RS)-2-Methyl-2-pentenyl-1R,cis-2,2-dimethyl-3-[(ΔE)-2-fluor-3-oxo-3-ethoxy-propenyl]-cyclopropan-carboxylat;

α-2-Methyl-2-E-butenyl-1R,cis-2,2-dimethyl-3-[(ΔE)-2-fluor-3-ethoxy-3-oxo-1-propenyl]-cyclopropan-carboxylat;

1-Ethinyl-2-methyl-2-E-pentenyl-1R,cis-2,2-dimethyl-3-[(ΔZ)-3-methoxy-3-oxo-1-propenyl]-cyclopropan-carboxylat;

1-Ethinyl-2-methyl-2-E-pentenyl-1R,cis-2,2-dimethyl-3-[(ΔE)-2-fluor-3-ethoxy-3-oxo-1-propenyl]-cyclopropan-carboxylat;

1-Ethenyl-2-methyl-ΔE-penten-2-yl-1R,cis-2,2-dimethyl-3-[(ΔE)-2-fluor-3-ethoxy-3-oxo-1-propenyl]-cyclopropan-carboxylat;

2-Methyl-2-E-pentenyl-1R,cis-2,2-dimethyl-3-[(ΔZ)-3-methoxy-3-oxo-1-propenyl]-cyclopropan-carboxylat.

6. Verfahren zur Herstellung der Verbindungen der allgemeinen Formel (I) gemäss Anspruch 1, dadurch gekennzeichnet, dass man eine Säure der allgemeinen Formel (II)

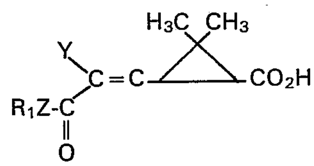

(II)

worin Y, Z und $R_1$ die in Anspruch 1 angegebene Bedeutung besitzen, oder ein funktionelles Derivat dieser Säure mit einem Alkohol der allgemeinen Formel (III)

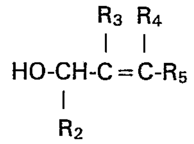

(III)

worin $R_2$, $R_3$, $R_4$ und $R_5$ die in Anspruch 1 angegebene Bedeutung besitzen, oder mit einem funktionellen Derivat dieses Alkohols umsetzt.

7. Verfahren gemäss Anspruch 6, dadurch gekennzeichnet, dass man die Säure der Formel (II) mit dem Alkohol der Formel (III) in Gegenwart von Dicyclohexylcarbodiimid und 4-Dimethylaminopyridin verestert.

8. Verbindungen der Formel (I) gemäss einem der Ansprüche 1 bis 5 zu deren Verwendung bei der Bekämpfung von Parasiten der Pflanzen, Parasiten von Räumlichkeiten und Parasiten warmblütiger Tiere.

9. Zusammensetzungen für die Bekämpfung von Parasiten der Pflanzen, Parasiten von Räumlichkeiten und Parasiten warmblütiger Tiere, dadurch gekennzeichnet, dass sie als Wirkstoff zumindest eines der gemäss einem der Ansprüche 1 bis 5 definierten Produkte enthalten.

10. Insektizide Zusammensetzungen, enthaltend als Wirkstoff eines der Produkte gemäss einem der Ansprüche 1 bis 5.

11. Akarizide Zusammensetzungen, enthaltend als Wirkstoff eines der Produkte gemäss einem der Ansprüche 1 bis 5.

12. Nematizide Zusammensetzungen, enthaltend als Wirkstoff eines der Produkte gemäss einem der Ansprüche 1 bis 5.

13. Akarizide Zusammensetzungen für die Bekämpfung von Parasiten warmblütiger Tiere, insbesondere von Zecken und Krätzmilben, dadurch gekennzeichnet, dass sie als Wirkstoff zumindest eines der Produkte gemäss einem der Ansprüche 1 bis 5 enthalten.

14. Zusammensetzungen für die tierische Ernährung, enthaltend als Wirkstoff zumindest eine der Produkte gemäss einem der Ansprüche 1 bis 5.

15. Mit insektizider, akarizider oder nematizider Aktivität versehene Assoziationen, dadurch gekennzeichnet, dass sie als Wirkstoff einesteils zumindest eine der Verbindungen der allgemeinen Formel (I) und anderenteils zumindest einen der Pyrethrinoidester,

ausgewählt unter den Estern der Allethrolone, des 3,4,5,6-Tetrahydrophthalimido-methylalkohols, des 5-Benzyl-3-furyl-methylalkohols, des 3-Phenoxybenzylalkohols und der α-Cyano-3-phenoxybenzylalkohole der Chrysanthemumsäuren, den Estern der 5-Benzyl-3-furyl-methylalkohols der 2,2-Dimethyl-3-(2-oxo-3-tetrahydrothiophenylidenmethyl)-cyclopropan-1-carbonsäuren, unter den Estern des 3-Phenoxybenzylalkohols und der α-Cyano-3-phenoxybenzylalkohole der 2,2-Dimethyl-3-(2,2-dichlorvinyl)-cyclopropan-1-carbonsäuren, den Estern der α-Cyano-3-phenoxy-benzylalkohole der 2,2-Dimethyl-3-(2,2-dibromvinyl)-cyclopropan-1-carbonsäuren, den Estern des 3-Phenoxybenzylalkohols der 2-p-Chlorphenyl-2-isopropylessigsäuren, den Estern der Allethrolone, des 3,4,5,6-Tetrahydrophthalimido-methylalkohols, des Benzyl-3-furyl-methylalkohols, des 3-Phenoxybenzylalkohols und der α-Cyano-3-phenoxy-benzylalkohole der 2,2-Dimethyl-3-(1,2-2,2-tetrahaloethyl)-cyclopropan-1-carbonsäuren, enthalten, worin «halo» ein Fluor-, Chlor- oder Bromatom bedeutet, wobei die Säure- und Alkoholverknüpfungen der vorstehenden Pyrethrinoidester in sämtlichen ihrer möglichen stereoisomeren Formen vorliegen können.

16. Zusammensetzungen und Assoziationen gemäss einem der Ansprüche 9 bis 15, dadurch gekennzeichnet, dass sie ausserdem einen Synergisten der Pyrethrinoide enthalten.

17. Als neue, industrielle Produkte das Produkt der Formel

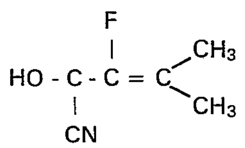

und das Produkt der Formel

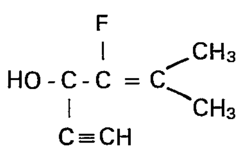

**Patentansprüche für den Vertragstaat:** AT

1. Verfahren zur Herstellung der Verbindungen der allgemeinen Formel (I)

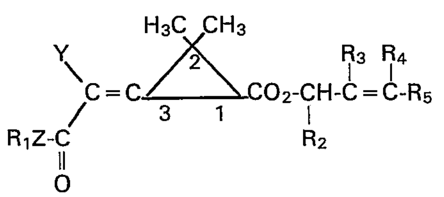

(I)

in sämtlichen ihrer stereoisomeren Formen isoliert oder im Gemisch, worin Y ein Wasserstoff-, Fluor-, Chlor- oder Bromatom bedeutet, Z ein Sauerstoff- oder Schwefelatom darstellt, $R_1$ <u>entweder</u> gesättigten oder ungesättigten, linearen, verzweigten oder cyclischen Alkylrest mit 1 bis 8 Kohlenstoffatomen, der gegebenenfalls durch eine oder mehrere gleiche oder verschiedene funktionelle Gruppen substituiert ist, <u>oder</u> einen Arylrest mit 6 bis 14 Kohlenstoffatomen, der gegebenenfalls durch eine oder mehrere gleiche oder verschiedene funktionelle Gruppen substituiert ist, <u>oder</u> einen heterocyclischen Rest, der gegebenenfalls durch eine oder mehrere gleiche oder verschiedene funktionelle Gruppen substituiert ist, bedeutet, $R_2$ ein Wasserstoffatom, ein Fluor-, Chlor- oder Bromatom, einen Alkylrest mit 1 bis 4 Kohlenstoffatomen, eine Gruppe $-C{\equiv}N$ oder eine Gruppe $-C{\equiv}CH$ bedeutet, $R_3$, $R_4$, $R_5$, die gleich oder verschieden sind, ein Wasserstoffatom, ein Fluor-, Chlor- oder Bromatom, einen linearen, verzweigten oder cyclischen Alkylrest mit 1 bis 8 Kohlenstoffatomen, der gegebenenfalls durch eine oder mehrere gleiche oder verschiedene funktionelle Gruppen substituiert ist, einen Alkenylrest mit 2 bis 8 Kohlenstoffatomen oder einen Alkinylrest mit 2 bis 8 Kohlenstoffatomen bedeuten oder die Reste $R_3$, $R_4$ und $R_5$ paarweise untereinander Ringe bilden, dadurch gekennzeichnet dass man eine Säure der allgemeinen Formel (II)

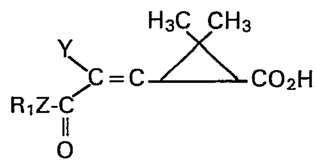

(II)

worin Y, Z und $R_1$ die vorstehenden Bedeutung besitzen, oder ein funktionelles Derivat dieser Säure mit einem Alkohol der allgemeinen Formel (III)

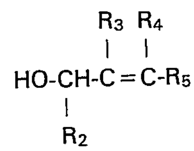

(III)

worin $R_2$, $R_3$, $R_4$ und $R_5$ die vorstehende Bedeutung besitzen, oder mit einem funktionellen Derivat dieses Alkohols umsetzt.

2. Verfahren gemäss Anspruch 1 zur Herstellung von Verbindungen der Formel (I) gemäss Anspruch 1, worin Y, Z, $R_1$, $R_3$, $R_4$ und $R_5$ wie in Anspruch 1 definiert sind und $R_2$ ein Wasserstoffatom, ein Fluor-, Chlor- oder Bromatom, eine Gruppe $-C{\equiv}CN$ oder $-C{\equiv}CH$ bedeutet, dadurch gekennzeichnet, dass man von einer Verbindung der Formel (II) gemäss Anspruch 1 und einer Verbindung der Formel (III) ausgeht, worin $R_2$, $R_3$, $R_4$ und $R_5$ wie vorstehend definiert sind.

3. Verfahren gemäss Anspruch 1 oder 2, dadurch gekennzeichnet, dass man die Säure der Formel (II) mit dem Alkohol der Formel (III) in Gegenwart von Dicyclohexylcarbodiimid und 4-Dimethylaminopyridin verestert.

4. Verfahren gemäss Anspruch 2 zur Herstellung von Verbindungen der Formel (I) gemäss Anspruch 1 der Formel ($I_A$)

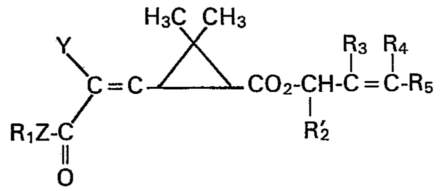

($I_A$)

worin Y, Z, $R_1$, $R_3$, $R_4$ und $R_5$ die in Anspruch 1 angegebene Bedeutung besitzen und $R'2$ ein Wasserstoffatom oder einen Ethinylrest bedeutet, dadurch gekennzeichnet, dass man von einer Verbindung der Formel (III) ausgeht, worin $R_2$ ein Wasserstoffatom oder einen Ethinylrest bedeutet.

5. Verfahren gemäss Anspruch 2 zur Herstellung von Verbindungen der Formel (I) gemäss Anspruch 1 der Formel ($I_B$)

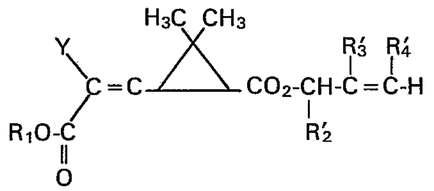

($I_B$)

worin Y, $R_1$ und $R'_2$ die in Anspruch 2 angegebenen Bedeutungen besitzen, $R'_3$ einen linearen, verzweigten oder cyclischen Alkylrest mit 1 bis 8 Kohlenstoffatomen bedeutet und $R'_4$ entweder einen linearen, verzweigten oder cyclischen Alkylrest mit 1 bis 8 Kohlenstoffatomen oder einen Alkinylrest mit 2 bis 8 Kohlenstoffatomen bedeutet, dadurch gekennzeichnet, dass man von einer Verbindung der Formel (II), worin Y und $R_1$ wie vorstehend definiert sind und Z ein Sauerstoffatom bedeutet, und einer Verbindung der Formel (III), worin $R_2$ ein Wasserstoffatom oder einen Ethinylrest bedeutet, $R_3$ einen linearen, verzweigten oder cyclischen Alkylrest mit 1 bis 8 Kohlenstoffatomen darstellt und $R_4$ entweder einen linearen, verzweigten oder cyclischen Alkylrest mit 1 bis 8 Kohlenstoffatomen oder einen Alkinylrest mit 2 bis 8 Kohlenstoffatomen bedeutet, ausgeht.

6. Verfahren gemäss einem der Ansprüche 2, 4 oder 5, dadurch gekennzeichnet, dass man von einer Verbindungen der Formel (II) ausgeht, worin Y ein Wasserstoff- oder Fluoratom bedeutet und die Geometrie der Doppelbindung der von dem Kohlenstoffatom in 3-Stellung des Cyclopropans getragenen Seitenkette die Z- bzw. E-Geometrie ist.

7. Verfahren gemäss Anspruch 1, dadurch gekennzeichnet, dass man von Verbindungen der Formel (II) und (III) derart ausgeht, dass man eine der Verbindungen der Formel (I) gemäss Anspruch 1 mit den folgenden Bezeichnungen herstellt:

1(R)- oder (S)-Ethinyl-2-methyl-2-(ΔE)-pentenyl-1R,cis-2,2-dimethyl-3-[(ΔZ)-3-methoxy-3-oxo-propenyl]-cyclopropan-carboxylat;

3-Methyl-2-butenyl-1R,cis-2,2-dimethyl-3-[(ΔZ)-3-oxo-3-methoxy-propenyl]-cyclopropan-carboxylat;

2-Fluor-3-methyl-2-butenyl-1R,cis-2,2-dimethyl-3-[(ΔZ)-3-oxo-3-methoxy-propenyl]-cyclopropan-carboxylat;

α-2-Methyl-2-propenyl-1R,cis-2,2-dimethyl-3-[1(ΔE)-3-ethoxy-3-oxo-2-fluor-propenyl]-cyclopropan-carboxylat;

α-2-Methyl-2-E-butenyl-1R,cis-2,2-dimethyl-3-[(ΔZ)-3-oxo-3-methoxy-propenyl]-cyclopropan-carboxylat;

2-Fluor-3-methyl-2-buten-1-yl-1R,cis-2,2-dimethyl-3-[(ΔE)-2-fluor-3-oxo-3-ethoxy-propenyl]-cyclopropan-carboxylat;

(RS)-2-Methyl-2-pentenyl-1R,cis-2,2-dimethyl-3-[(ΔE)-2-fluor-3-oxo-3-ethoxy-propenyl]-cyclopropan-carboxylat;

α-2-Methyl-2-E-butenyl-1R,cis-2,2-dimethyl-3-[(ΔE)-2-fluor-3-ethoxy-3-oxo-1-propenyl]-cyclopropan-carboxylat;

1-Ethinyl-2-methyl-2-E-pentenyl-1R,cis-2,2-dimethyl-3-[(ΔZ)-3-methoxy-3-oxo-1-propenyl]-cyclopropan-carboxylat;

1-Ethinyl-2-methyl-2-E-pentenyl-1R,cis-2,2-dimethyl-3-[(ΔE)-2-fluor-3-ethoxy-3-oxo-1-propenyl]-cyclopropan-carboxylat;

1-Ethenyl-2-methyl-ΔE-penten-2-yl-1R,cis-2,2-dimethyl-3-[(ΔE)-2-fluor-3-ethoxy-3-oxo-1-propenyl]-cyclopropan-carboxylat;

2-Methyl-2-E-pentenyl-1R,cis-2,2-dimethyl-3-[1(ΔZ)-3-methoxy-3-oxo-1-propenyl]-cyclopropan-carboxylat;

8. Zusammensetzungen für die Bekämpfung von Parasiten der Pflanzen, Parasiten von Räumlichkeiten und Parasiten warmblütiger Tiere, dadurch gekennzeichnet, dass sie als Wirkstoff zumindest einer der Produkte gemäss einem der Ansprüche 1, 2 und 4 bis 7 enthalten.

9. Insektizide Zusammensetzungen, dadurch gekennzeichnet, dass sie als Wirkstoff zumindest eines der Produkte gemäss einem der Ansprüche 1, 2 und 4 bis 7 enthalten.

10. Akarizide Zusammensetzungen, dadurch gekennzeichnet, dass sie als Wirkstoff zumindest eines der Produkte gemäss einem der Ansprüche 1, 2 und 4 bis 7 enthalten.

11. Nematizide Zusammensetzungen, dadurch gekennzeichnet, dass sie als Wirkstoff zumindest eines der Produkte gemäss einem der Ansprüche 1, 2 und 4 bis 7 enthalten.

12. Akarizide Zusammensetzungen für die Bekämpfung von Parasiten warmblütiger Tiere, insbesondere von Zecken und Krätzmilben, dadurch gekennzeichnet, dass sie als Wirkstoff zumindest eines der Produkte gemäss einem der Ansprüche 1, 2 und 4 bis 7 enthalten.

13. Zusammensetzungen für die tierische Ernährung, dadurch gekennzeichnet, dass sie als Wirkstoff zumindest eines der Produkte gemäss einem der Ansprüche 1, 2 und 4 bis 7 enthalten.

14. Zusammensetzungen mit insektizider, akarizider oder nematizider Aktivität, dadurch gekennzeichnet, dass sie als Wirkstoff einesteils zumindest eine der Verbindungen der allgemeinen Formel (I) und anderenteils zumindest einen der Pyrethrinoidester, ausgewählt unter den Estern der Allethrolone, des 3,4,5,6-Tetrahydrophthalimido-methylalkohols, des 5-Benzyl-3-furyl-methylalkohols, des 3-Phen-

oxybenzylalkohols und der α-Cyano-3-phenoxy-benzylalkohole der Chrysanthemumsäuren, den Estern der 5-Benzyl-3-furyl-methylalkohols der 2,2-Dimethyl-3-(2-oxo-3-tetrahydrothiophenylidenmethyl)-cyclopropan-1-carbonsäuren, unter den Estern des 3-Phenoxybenzylalkohols und der α-Cyano-3-phenoxybenzylalkohole der 2,2-Dimethyl-3-(2,2-dichlorvinyl)-cyclopropan-1-carbonsäuren, den Estern der α-Cyano-3-phenoxy-benzylalkohole der 2,2-Dimethyl-3-(2,2-dibromvinyl)-cyclopropan-1-carbonsäuren, den Estern des 3-Phenoxybenzylalkohols der 2-p-Chlorphenyl-2-isopropylessigsäuren, den Estern der Allethrolone, des 3,4,5,6-Tetrahydrophthalimido-methylalkohols, des Benzyl-3-furyl-methylalkohols, des 3-Phenoxybenzylalkohols und der α-Cyano-3-phenoxy-benzylalkohole der 2,2-Dimethyl-3-(1,2-2,2-tetrahaloethyl)-cyclopropan-1-carbonsäuren, enthalten, worin «halo» ein Fluor-, Chlor- oder Bromatom bedeutet, wobei die Säure- und Alkoholverknüpfungen der vorstehenden Pyrethrinoidester in sämtlichen ihrer möglichen stereoisomeren Formen vorliegen können.

15. Zusammensetzungen und Assoziationen gemäss einem der Ansprüche 8 bis 14, dadurch gekennzeichnet, dass sie ausserdem einen Synergisten der Pyrethrinoide enthalten.

16. Zusammensetzungen gemäss einem der Ansprüche 8 bis 15, dadurch gekennzeichnet, dass sie als Wirkstoff zumindest einen der Verbindungen der Formel (I) gemäss Anspruch 2 enthalten.

**Claims for the contracting States:**
BE, CH, DE, GB, IT, LI, LU, NL, SE

1. In all their isolated stereo-isomeric forms or in mixtures, the compounds with the genral formula (I):

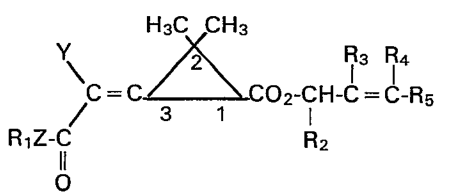

(I)

in which Y represents a hydrogen, fluorine, chlorine or bromine atom, Z represents an oxygen or sulphur atom, $R_1$ represents either a linear, branched or cyclic, saturated or unsaturated alkyl radical, containing from 1 to 8 carbon atoms, possibly substituted by one or more identical or different functional groups, or an aryl group containing from 6 to 14 carbon atoms, possibly substituted by one or more identical or different functional groups, or a heterocyclic radical possibly substituted by one or more identical or different functional groups, $R_2$ represents a hydrogen atom, a fluorine, chlorine or bromine atom, an alkyl radical containing from 1 to 4 carbon atoms, a group $-C\equiv N$ or a group $-C\equiv CH$, $R_3$, $R_4$, $R_5$, identical or different, represent a hydrogen atom, a fluorine, chlorine or bromine atom, a linear, branched or cyclic alkyl radical containing from 1 to 8 carbon atoms possibly substituted by one or more identical or different functional groups, an alkenyl radical including from 2 to 8 carbon atoms or an alkynyl radical including from 2 to 8 carbon atoms, or the radicals $R_3$, $R_4$ and $R_5$ form rings between themselves, two by two.

2. The compounds according to claim 1, with the general formula ($I_A$):

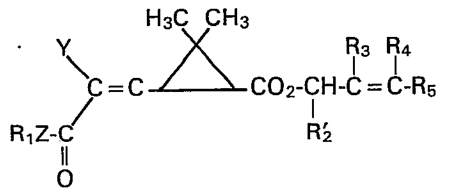

($I_A$)

in which Y, Z, $R_1$, $R_3$, $R_4$ and $R_5$ retain the same significances as in claim 1 and R′ 2 represents a hydrogen atom or an ethynyl radical.

3. The compound according to claim 2 with the general formule ($I_B$):

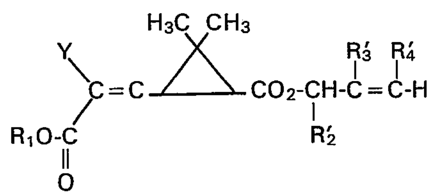

($I_B$)

in which Y, $R_1$ and $R'_2$ retain the same significances as in claim 2, $R'_3$ represents a linear, branched or cyclic alkyl radical, containing from 1 to 8 carbon atoms and $R'_4$ represents either a linear, branched or cyclic alkyl radical containing from 1 to 8 carbon atoms, or an alkynyl radical containing 2 to 8 carbon atoms.

4. The compounds as defined in any one of the claims 1 to 3, corresponding to the formule (I) in which Y represents a hydrogen or fluorine atom, and the geometry of the double bond of the lateral chain carried on the carbon in position 3 of the cyclopropane is Z or E respectively.

5. Any one of the compounds with the formula (I), as defined in claim 1, the names of which follow:

- 1R,cis 2,2-dimethyl 3-[1(ΔZ) 3-methoxy 3-oxo-propenyl]-cyclopropane carboxylate of 1(R) or (S)-ethynyl-2-methyl-2-(ΔE)-pentenyl;
- 1R,cis 2,2-dimethyl 3-[(ΔZ) 3-oxo-3-methoxy-propenyl]-cyclopropane carboxylate of 3-methyle-2-butenyl;
- 1R,cis 2,2-dimethyl-3-[(ΔZ) 3-oxo-3-methoxy-propenyl]-cyclopropane carboxylate of 2-fluoro-3-methyl-2-butenyl;
- 1R,cis 2,2-dimethyl-3-[1(ΔE)-3-ethoxy-3-oxo-2-fluoropropenyl]-cyclopropane carboxylate of α-2-methyl-2-propenyl;
- 1R,cis 2,2-dimethyl-3-[(ΔZ)-3-oxo 3-methoxy-propenyl]-cyclopropane carboxylate of α-2-methyl-2-E-butenyl;
- 1R,cis 2,2-dimethyl-3-[(ΔE)-2-fluoro-3-oxo-3-ethoxypropenyl]-cyclopropane carboxylate of 2-fluoro-3-methyl-2-buten-1-yl;
- 1R,cis 2,2-dimethyl-3-[(ΔE)-2-fluoro-3-oxo-3-ethoxypropenyl]-cyclopropane carboxylate of (RS) 2-methyl-2-pentenyl;

- 1R,cis 2,2-dimethyl-3-[(ΔE)-2-fluoro-3-ethoxy-3-oxo-1-propenyl]-cyclopropane carboxylate of α-2-methyl-2-E-butenyl;
- 1R,cis 2,2-dimethyl-3-[(ΔZ)-3-methoxy-3-oxo-1-propenyl]-cyclopropane carboxylate of 1-ethynyl-2-methyl-2-E-pentenyl;
- 1R,cis 2,2-dimethyl-3-[(ΔE)-2-fluoro-3-ethoxy-3-oxo-1-propenyl]-cyclopropane carboxylate of 1-ethynyl-2-methyl-2-E-pentenyl;
- 1R,cis 2,2-dimethyl-3-[(ΔE)-2-fluoro-3-ethoxy-3-oxo-1-propenyl]-cyclopropane carboxylate of 1-ethenyl-2-methyl-ΔE-penten-2-yl;
- 1R,cis 2,2-dimethyl-3-[(ΔZ)-3-methoxy-3-oxo-1-propenyl]-cyclopropane carboxylate of 2-methyl-2-E-pentenyl.

6. Preparation process for the compounds with the general formula (I) as defined in claim 1, characterized in that an acid with the general formula (II):

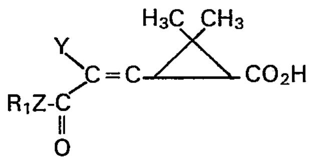
(II)

in which Y, Z and $R_1$ have the significance indicated in claim 1, or a functional derivative of this acid, is made to react on an alcohol with the general formula (III);

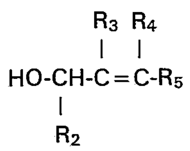
(III)

in which $R_2$, $R_3$, $R_4$ and $R_5$ have the significance indicated in claim 1, or on a functional derivative of this alcohol.

7. Preparation process according to claim 6, characterized in that the acid with the formula (II) is esterified by the alcohol with the formula (III) in the presence of dicyclohexylcarbodiimide and 4-dimethylaminopyridine.

8. Compounds with the formula (I) as defined in any one of claims 1 to 5, for their use in combatting parasites of vegetation, parasites of premises and parasites of warm-blooded animals.

9. Compositions intended to combat parasites of vegetation, parasites of premises and parasites of warm-blooded animals, characterized in that they contain as active principle at least one of the products defined in any one of the claims 1 to 5.

10. Insecticide compositions containing as active principle at least one of the products defined in any of the claims 1 to 5.

11. Acaricide compositions containing as active principle at least one of the products defined in any of the claims 1 to 5.

10. Nematocide compositions containing as active principle at least one of the products defined in any of the claims 1 to 5.

13. Acaricide compositions intended for combatting parasites of warm-blooded animals, notably for combatting ticks and mites, characterized in that they contain as active principle at least one of the products defined in any one of the claims 1 to 5.

14. Compositions intended for animal feeding containing as active principle at least one of the products defined in any one of the claims 1 to 5.

15. Combinations endowed with insecticide, acaricide or nematocide activity, characterized in that they contain as active material, on the one hand at least one of the compounds with the general formula (I), and on the other hand, one at least of the pyrethrinoid esters chosen from the group constituted by the esters of allethrolones, of 3,4,5,6-tetrahydrophthalimidomethyl alcohol, of 5-benzyl-3-furyl methyl alcohol, of 3-phenoxybenzyl alcohol and of α-cyano-3-phenoxybenzyl alcohols with chrysanthemic acids, by the esters of 5-benzyl-3-furyl methyl alcohol with 2,2-dimethyl-3-(2-oxo-3-tetrahydrothiophenylidenemethyl)-cyclopropane-1-carboxylic acids, by the esters of 3-phenoxybenzyl alcohol and of α-cyano-3-phenoxybenzyl alcohols with 2,2-dimethyl-3-(2,2-dichlorovinyl)-cyclopropane-1-carboxylic acids, by the esters of α-cyano-3-phenoxybenzyl alcohols with 2,2-dimethyl-3-(2,2-dibromovinyl)-cyclopropane-1-carboxylic acids, by the esters of 3-phenoxybenzyl alcohol with 2-parachlorophenyl-2-isopropyl acetic acids, by the esters of allethrolones, of 3,4,5,6-tetrahydrophthalimidomethyl alcohol, of 5-benzyl-3-furyl methyl alcohol, of 3-phenoxybenzyl alcohol and of α-cyano-3-phenoxybenzyl alcohols with 2,2-dimethyl-3-(1,2,2,2-tetrahaloethyl)-cyclo-propane-1-carboxylic acids, in which «halo» represents a fluorine, chlorine or bromine atom, it being understood that the acid and alcohol copulas of the above pyrethrinoid esters can exist in all their possible stereo-isomeric forms.

16. Compositions and combinations according to ny of claims 9 to 15, characterized in that they contain moreover, a synergist of pyrethrinoids.

17. As new industrial products, the product with the formula:

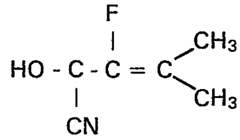

and the product with the formula:

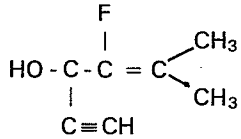

**Claims for the contracting State:** AT

1. Process for the preparation, in all their isolated stereoisomeric forms or in mixtures, of the compounds with the general formula (I):

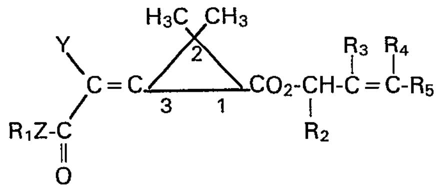

(I)

in which Y represents a hydrogen, fluorine, chlorine or bromine atom, Z represents an oxygen or sulphur atom, $R_1$ represents either a linear, branched or cyclic, saturated or unsaturated alkyl radical, containing from 1 to 8 carbon atoms, possibly substituted by one or more identical or different functional groups, or an aryl group containing from 6 to 14 carbon atoms, possibly substituted by one or more identical or different functional groups, or a heterocyclic radical possibly substituted by one or more identical or different functional groups, $R_2$ represents a hydrogen atom, a fluorine, chlorine or bromine atom, an alkyl radical containing from 1 to 4 carbon atoms, a group $-C{\equiv}N$ or a group $-C{\equiv}CH$, $R_3$, $R_4$, $R_5$, identical or different, represent a hydrogen atom, a fluorine, chlorine or bromine atom, a linear, branched or cyclic alkyl radical containing from 1 to 8 carbon atoms possibly substituted by one or more identical or different functional groups, an alkenyl radical including from 2 to 8 carbon atoms or an alkynyl radical including from 2 to 8 carbon atoms, or the radicals $R_3$, $R_4$ and $R_5$ form rings between themselves, two by two, characterized in that an acid with the general formula (II)

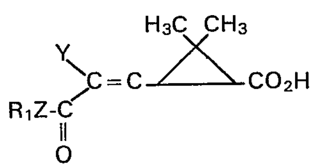

(II)

in which Y, Z and $R_1$ have the significance indicated previously, or a functional derivative of this acid, is made to act on an alcohol with the general formula (III):

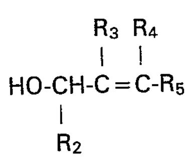

(III)

in which $R_2$, $R_3$, $R_4$ and $R_5$ have the significance indicated previously or on a functional derivative of this alcohol.

2. Process according to claim 1, for the preparation of compounds with the general formula (I) as defined in claim 1, in which Y, Z, $R_1$, $R_3$, $R_4$ and $R_5$ are defined as in claim 1 and $R_2$ represents a hydrogen atom, a fluorine, chlorine or bromine atom, a group $-C{\equiv}CN$ or $-C{\equiv}CH$, characterized in that at the start a compound with the formula (II) as defined in claim 1 and a compound with the formula (III) in which $R_2$, $R_3$, $R_4$ and $R_5$ are defined as above, are used.

3. Preparation process according to claim 1 or 2, characterized in that the acid with the formula (II) is esterified with the alcohol with the formula (III) in the process of dicyclohexylcarbodiimide and 4-dimethylaminopyridine.

4. Process according to claim 2, for the preparation of compounds with the formula (I), as defined in claim 1, answering to the formula ($I_A$):

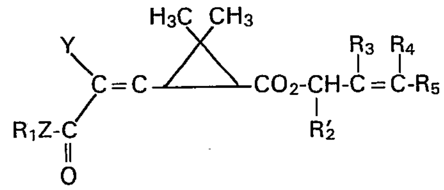

($I_A$)

in which Y, Z, $R_1$, $R_3$, $R_4$ and $R_5$ retain the significances of claim 1 and $R'_2$ represents a hydrogen atom or an ethynyl radical, characterized in that at the start a compound with the formula (III) in which $R_2$ represents a hydrogen atom or an ethynyl radical is used.

5. Process according to claim 2, for the preparation of compounds with the formula (I), as defined in claim 1, answering to the formula ($I_B$):

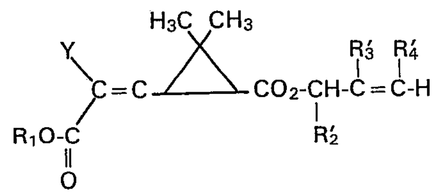

($I_B$)

in which Y, $R_1$ and $R'_2$ retain the significances as in claim 2, $R'_3$ represents a linear, branched or cyclic alkyl radical, containing from 1 to 8 carbon atoms and $R'_4$ represents either a linear, branched or cyclic alkyl radical containing from 1 to 8 carbon atoms, or an alkynyl radical containing from 2 to 8 carbon atoms, characterized in that at the start a compound with the formula (II) in which Y and $R_1$ are defined as previously and Z represents an oxygen atom and a compound with the formula (III) in which $R_2$ represents a hydrogen atom or an ethynyl radical, $R_3$ represents a linear, branched or cyclic alkyl radical containing from 1 to 8 carbon atoms and $R_4$ represents either a linear, branched or cyclic alkyl radical containing from 1 to 8 carbon atoms, or an alkynyl radical containing from 2 to 8 carbon atoms, are used.

6. Process according to claims 2, 4 or 5, characterized in that at the start a compound with the formula (II) is used in which Y represents a hydrogen or fluorine atom, and the geometry of the double bond of the lateral chain carried on the carbon in position 3 of the cyclopropane is Z or E respectively.

7. Process according to claim 1, characterized in that at the start the compounds with the formulae (II) and (III) are chosen so as to prepare any one of the compounds with the formula (I) as defined in claim 1, the names of which follow:

- 1R,cis 2,2-dimethyl 3-[1(ΔZ) 3-methoxy 3-oxopropenyl]-cyclopropane carboxylate of 1(R) or (S)-ethynyl-2-methyl-2-(ΔE)-pentenyl;

- 1R,cis 2,2-dimethyl 3-[(ΔZ) 3-oxo-3-methoxy-propenyl]-cyclopropane carboxylate of 3-methyle-2-butenyl;

- 1R,cis 2,2-dimethyl-3-[(ΔZ) 3-oxo-3-methoxy-propenyl]-cyclopropane carboxylate of 2-fluoro-3-methyl-2-butenyl;

- 1R,cis 2,2-dimethyl-3-[1(ΔE)-3-ethoxy-3-oxo-2-fluoropropenyl]-cyclopropane carboxylate of α-2-methyl-2-propenyl;

- 1R,cis 2,2-dimethyl-3-[(ΔZ)-3-oxo 3-methoxy-propenyl]-cyclopropane carboxylate of α-2-methyl-2-E-butenyl;

- 1R,cis 2,2-dimethyl-3-[(ΔE)-2-fluoro-3-oxo-3-ethoxypropenyl]-cyclopropane carboxylate of 2-fluoro-3-methyl-2-buten-1-yl;

- 1R,cis 2,2-dimethyl-3-[(ΔE)-2-fluoro-3-oxo-3-ethoxypropenyl]-cyclopropane carboxylate of (RS) 2-methyl-2-pentenyl;

- 1R,cis 2,2-dimethyl-3-[(ΔE)-2-fluoro-3-ethoxy-3-oxo-1-propenyl]-cyclopropane carboxylate of α-2-methyl-2-E-butenyl;

- 1R,cis 2,2-dimethyl-3-[(ΔZ)-3-methoxy-3-oxo-1-propenyl]-cyclopropane carboxylate of 1-ethynyl-2-methyl-2-E-pentenyl;

- 1R,cis 2,2-dimethyl-3-[(ΔE)-2-fluoro-3-ethoxy-3-oxo-1-propenyl]-cyclopropane carboxylate of 1-ethynyl-2-methyl-2-E-pentenyl;

- 1R,cis 2,2-dimethyl-3-[(ΔE)-2-fluoro-3-ethoxy-3-oxo-1-propenyl]-cyclopropane carboxylate of 1-ethenyl-2-methyl-ΔE-penten-2-yl;

- 1R,cis 2,2-dimethyl-3-[(ΔZ)-3-methoxy-3-oxo-1-propenyl]-cyclopropane carboxylate of 2-methyl-2-E-pentenyl.

8. Compositions intended to combat parasites of vegetation, parasites of premises and parasites of warm-blooded animals, characterized in that they contain as active principle at least one of the products defined in any one of the claims 1, 2 and 4 to 7.

9. Insecticide compositions containing as active principle at least one of the products defined in any one of the claims 1, 2 and 4 to 7.

10. Acaricide compositions containing as active principle at least one of the products defined in any one of the claims 1, 2 and 4 to 7.

11. Nematocide compositions containing as active principle at least one of the products defined in any one of the claims 1, 2 and 4 to 7.

12. Acaricide compositions intended for combatting parasites of warm-blooded animals, notably for combatting ticks and mites, characterized in that they contain as active principle at least one of the products defined in any one of the claims 1, 2 and 4 to 7.

13. Compositions intended for animal feeding containing as active principle at least one of the products defined in any one of the claims 1, 2 and 4 to 7.

14. Combinations endowed with insecticide, acaricide or nematocide activity, characterized in that they contain as active material, on the one hand at least one of the compounds with the general formula (I), and on the other hand, one at least of the pyrethrinoid esters chosen from the group constituted by the esters of allethrolones, of 3,4,5,6-tetrahydrophthalimidomethyl alcohol, of 5-benzyl-3-furyl methyl alcohol, of 3-phenoxybenzyl alcohol and of α-cyano-3-phenoxybenzyl alcohols with chrysanthemic acids, by the esters of 5-benzyl-3-furyl methyl alcohol with 2,2-dimethyl-3-(2-oxo-3-tetrahydrothiophenylide-nemethyl)-cyclopropane-1-carboxylic acids, by the esters of 3-phenoxybenzyl alcohol and of α-cyano-3-phenoxybenzyl alcohols with 2,2-dimethyl-3-(2,2-dichlorovinyl)-cyclopropane-1-carboxylic acids, by the esters of α-cyano-3-phenoxybenzyl alcohols with 2,2-dimethyl-3-(2,2-dibromovinyl)-cyclopropane-1-carboxylic acids, by the esters of 3-phenoxybenzyl alcohol with 2-parachlorophenyl-2-isopropyl acetic acids, by the esters of allethrolones, of 3,4,5,6-tetrahydrophthalimidomethyl alcohol, of 5-benzyl-3-furyl methyl alcohol, of 3-phenoxybenzyl alcohol and of α-cyano-3-phenoxybenzyl alcohols with 2,2-dimethyl-3-(1,2,2,2-tetrahaloethyl)-cyclopropane-1-carboxylic acids, in which «halo» represents a fluorine, chlorine or bromine atom, it being understood that the acid and alcohol copulas of the above pyrethrinoid esters can exist in all their possible stereo-isomeric forms.

15. Compositions and combinations according to any one of the claims 8 to 14, characterized in that they contain moreover, a synergist of pyrethrinoids.

16. Compositions according to any of the claims 8 to 15, characterized in that they contain, as active principle, at least one of the compounds with the formula (I), as defined in claim 2.